# FASCICULE DE BREVET EUROPEEN

(11) **EP 2 245 090 B1**
(45) Date de publication et mention de la délivrance du brevet: **15.10.2014**
(21) Numéro de dépôt: 09721148.6
(22) Date de dépôt: 20.02.2009
(51) Int. Cl.: C08K 5/19, C08L 95/00

(54) **Composition comprenant un tensio-actif pour des bitumes**
Zusammensetzung mit einem Tensid für Bitumen
Composition comprising a surfactant for bitumens

(30) Priorité: 20.02.2008 FR 0800928; 21.05.2008 FR 0853294
(43) Date de publication de la demande: 03.11.2010
(73) Titulaire: CECA S.A., 92250 La Garenne Colombes (FR); Eiffage Travaux Publics, 93330 Neuilly Sur Marne (FR)
(72) Inventeur: GILLET, Jean-Philippe, F-69530 Brignais (FR); JORDA, Eric, F-69005 Lyon (FR); BARRETO, Gilles, F-69510 Messimy (FR); GONZALEZ LEON, Juan Antonio, F-69008 Lyon (FR)
(74) Mandataire: Caillet, Isabelle
(86) Numéro de dépôt international: PCT/FR2009/050273
(87) Numéro de publication internationale: WO 2009/112737

(56) Documents cités:
- DE-A1- 2 157 290
- FR-A- 2 869 910
- US-A1- 2007 154 546
- TATSUMI T ET AL: "NOVEL HYDROLYZABLE AND BIODEGRADABLE CATIONIC GEMINI SURFACTANTS: 1,3-BIS not (ACYLOXYALKYL)-DIMETHYLAMMONIO 3/4 -2-HYDROXYPROPANE DICHLORIDE" JOURNAL OF SURFACTANTS AND DETERGENTS, SPRINGER, BERLIN, DE, vol. 3, no. 2, 1 avril 2000 (2000-04-01), pages 167-172, XP000927219 ISSN: 1097-3958
- FOLDES FRANCIS F ET AL: "omega.-Amino fatty acid esters of choline: interaction with cholinesterases and neuromuscular activity in man" JOURNAL OF PHARMACOLOGY AND EXPERIMENTAL THERAPEUTICS, AMERICAN SOCIETY FOR PHARMACOLOGY AND EXPERIMENTAL THERAPEUTICS, US, vol. 150, no. 2, 1 janvier 1965 (1965-01-01), pages 220-230, XP009107166 ISSN: 0022-3565
- DATABASE CA [Online] CHEMICAL ABSTRACTS SERVICE, COLUMBUS, OHIO, US; "Detergent compositions" XP002499708 extrait de STN Database accession no. 1983:109315 & JP 57 143399 A (LION CORP., JAPAN) 4 septembre 1982 (1982-09-04)

## Description

La présente invention porte sur une composition comprenant un tensioactif particulier, sur un procédé de préparation d'un tel tensioactif et sur les applications de ce tensioactif et de ces compositions notamment dans des produits bitumineux.

Elle concerne plus particulièrement des compositions bitumineuses, par exemple sous la forme d'émulsions ou de compositions anhydres, comprenant de telles compositions, pour la réalisation d'enduits divers, par exemple des enduits pour l'étanchéité des toits et des enduits superficiels, ou encore pour la réalisation de tapis routiers, par exemple de type enrobés à froid, ou encore pour des liants anhydres tels que les enrobés à chaud, les enduits au bitume fluidifié.

Dans le cadre de la présente invention, on entend par bitume, produits ou liants bitumineux ou plus simplement liant, le bitume naturel et les bitumes issus d'une huile minérale et les mélanges qui en résultent. Les bitumes obtenus par craquage et les goudrons sont aussi ici considérés comme produits bitumineux au sens de la présente invention, ainsi que les mélanges qui peuvent en résulter. Les résidus de distillation sous vide, de distillation, de précipitation (comme par exemple au propane), les bitumes soufflés sont des exemples considérés dans le cadre de cette invention.

On considère également les liants routiers synthétiques ou d'origine végétale contenant des résines naturelles modifiées ou non en mélange avec des huiles d'origine végétale ou leurs dérivés. On considère également ici les bitumes dilués à l'aide de solvants pétroliers, les bitumes dilués à l'aide d'huiles végétales, ainsi que les émulsions de bitume.

De tels produits ou liants bitumineux peuvent être utilisés tels quels par exemple pour leur utilisation comme enduits d'étanchéité pour les toits ou couches d'accrochage routière. Alternativement, ils peuvent être mélangés à des matières minérales par exemple sous la forme de granulats, tels que sable, gravillons, etc...

Ainsi, dans le milieu de l'industrie routière on distingue plusieurs techniques de préparation de matériaux routiers bitumineux :
- les techniques dites à froid, sont basées sur l'utilisation d'émulsions de bitume comme liant. Le bitume est alors dispersé en phase aqueuse par action mécanique en présence de tensioactifs. Ces techniques permettent d'utiliser le liant et les granulats à des températures inférieures à 100°C et le plus souvent à température ambiante.
- les techniques dites à chaud utilisent un liant anhydre. Le liant est rendu ou maintenu fluide par chauffage à plus de 100°C généralement. Parmi ces techniques, il en existe pour lesquelles les granulats utilisés sont chauffés et séchés à haute température avant contact avec le liant. Un enrobage peut avoir lieu à une température aux alentours de 140°C ou plus selon les caractéristiques du liant, auquel cas on parle d'enrobés à chaud. Dans les techniques au liant anhydre on peut citer aussi les enduits au bitume fluidifié ou fluxé, où le bitume est rendu fluide par l'ajout d'un « diluant » éventuellement siccatif.
- les techniques dites tièdes qui permettent de réaliser les opérations décrites ci-dessus à des températures inférieures à celles utilisées pour les techniques à chaud pour obtenir des enrobés tièdes. Là aussi on peut distinguer les techniques employant des températures supérieures à 100°C et celles employant des températures inférieures à 100°C, c'est à dire pour lesquelles un apport d'énergie thermique pour la production du matériau routier est nécessaire tout en permettant la présence d'eau liquide dans une des étapes du procédé.
- les techniques utilisant des polymères qui peuvent être ajoutés au bitume de manière à obtenir des produits bitumineux avec des propriétés mécaniques améliorées. Ces produits bitumineux modifiés par des polymères sont utilisés en construction routière, urbaine, aéroportuaire ainsi que pour l'étanchéité en utilisant par exemple les techniques mentionnées ci-dessus. Les polymères sont de grandes molécules formées par liaisons chimiques covalentes entre plusieurs unités répétées ou monomères. La modification des bitumes avec des polymères de fortes masses molaires (au moins 10 000 g/mol) est généralement nécessaire pour améliorer les propriétés mécaniques du produit bitumineux. La modification des bitumes par les polymères permet d'augmenter la souplesse à basse température et d'augmenter le point de ramollissement à haute température. Cela permet également d'augmenter la cohésion et le module du bitume ainsi que ceux des matériaux routiers, augmentant ainsi la résistance à l'omiérage.

Quelle que soit la technique utilisée parmi les différentes techniques décrites ci-dessus, il est généralement utile d'associer la composition bitumineuse à un additif choisi en fonction de l'application souhaitée.

Ainsi, dans les techniques utilisant des émulsions de bitume, on distingue principalement deux types d'application :
- les techniques d'enrobage, dont on peut citer pour exemple parmi les plus utilisés les « graves émulsions », les « enrobés coulés à froid » (ECF), les « enrobés denses à froid »,
- les techniques de répandage avec principalement les « enduits superficiels » et les « couches d'accrochage ».

Il est connu que pour faire une bonne émulsion de répandage, il faut une émulsion à rupture rapide afin qu'elle se déstabilise très rapidement après pulvérisation. Il faut aussi une émulsion stable au stockage pour éviter la rupture dans les cuves ou les camions et avec une bonne adhésivité sur tous types de granulat et support.

En règle générale, les émulsions qui répondent à ces critères sont des émulsions cationiques utilisées à pH inférieur à 7 et qui donnent une bonne adhésivité sur la majeure partie des granulats disponibles. Les émulsifiants généralement utilisés pour ces techniques de répandage sont donc des tensioactifs cationiques de type polyamines, amidoamines et imidazolines sur chaînes grasses (12 à 22 atomes de carbone) salifiés par des acides forts et plus généralement l'acide chlorhydrique.

Ainsi, les tensioactifs utilisés couramment pour les émulsions des techniques de répandage ne sont pas toujours satisfaisants en ce qui concerne leur innocuité vis-à-vis de l'environnement. En effet, ces tensioactifs peuvent présenter une certaine toxicité et ils ne sont pas d'origine renouvelable à 100%.

Le document FR 2 869 910 A1 décrit des tensioactifs obtenus à partir d'alcools gras issus des triglycérides constituant des huiles végétales. Toutefois, ce document indique que les tensioactifs obtenus à partir d'acides gras issus de végétaux ne permettent pas d'obtenir des émulsions bitumineuses stables. Par ailleurs, le tensioactif décrit dans FR 2 869 910 A1 est d'une efficacité modérée. Comme le montrent les dosages préconisés dans les exemples de ce document, il est nécessaire de passer par une étape de purification très compliquée industriellement et surtout très coûteuse pour pouvoir descendre les dosages aux environs de 0,25%.

Dans les techniques à chaud utilisant un liant anhydre, on distingue principalement deux types d'application :
- les enrobés à chaud,
- les enduits au bitume fluidifié ou fluxé.

Dans ces techniques, il est très souvent nécessaire d'améliorer l'adhésivité du bitume sur les granulats pour augmenter les performances mécaniques du revêtement routier final et principalement la tenue à l'eau. En effet, une bonne adhésivité entre la composition bitumineuse et les granulats assure également une bonne cohésion des granulats entre eux, une telle cohésion étant nécessaire pour assurer à la fois une bonne résistance au tapis routier mais également lui conférer une aptitude à absorber de légères déformations, comme des dilatations, des passages répétés de poids lourds, etc., sans provoquer de cassures ni d'orniérages ou autres déformations non souhaitables du revêtement routier.

Des additifs destinés à promouvoir l'adhésivité entre les compositions bitumineuses et les granulats minéraux sont connus. On les appelle de façon générique « dopes d'adhésivité ». Ces additifs sont généralement des tensioactifs anioniques, cationiques ou amphotères, comme par exemples ceux contenant des groupements fonctionnels chimiques aminés, amidoamines, imidazolines, esters phosphoriques, acide gras et mélanges de ces produits. En fonction des granulats utilisés pour la réalisation du tapis routier et du degré de sollicitation de ce dernier, on choisit le ou les tensioactifs les plus adéquats. Toutefois, les tensioactifs connus comme dopes d'adhésivité ne sont pas toujours satisfaisants. Ainsi, les produits aminés connus sont par exemple très sensibles à la nature des granulats et demandent souvent une adaptation de formule à chaque changement de nature de granulats.

Dans les techniques dites tièdes, on peut distinguer les techniques employant des températures supérieures à 100°C et celles employant des températures inférieures à 100°C, c'est à dire pour lesquelles un apport d'énergie thermique pour la production du matériau routier est nécessaire tout en permettant la présence d'eau liquide dans une des étapes du procédé. Dans tous les cas le fait d'abaisser les températures des enrobés par rapport aux enrobés à chaud, des granulats et éventuellement du bitume par rapport aux techniques utilisant le liant anhydre permet de réduire la consommation d'énergie mais conduit à des problèmes d'enrobage, d'adhésion, de fluidité de l'enrobé ainsi que des propriétés qui en découlent comme la cohésion, la résistance à l'omiérage.

Ainsi, les documents US 5 910 212 A et WO 1997/020890 décrivent l'utilisation d'un liant bitumineux dur combiné au mélange entre un liant bitumineux mou et des granulats : toutefois, dans ces cas, la pénétration finale du liant composite dur - mou reste assez élevée car il faut employer un liant mou pour réussir à bien enrober les granulats.

Le document US 2005/0076810 décrit l'utilisation d'un additif à capacité de désorption élevé : toutefois, dans ce cas, une fois l'eau évaporée la fluidité n'est plus assurée.

Le document EP 1 469 038 décrit qu'une partie des granulats est chauffée et séchée et mélangée avec le bitume, puis est ensuite mélangée avec des granulats mouillés. Le document US 2006/0236614 décrit que les granulats sont séchés et mélangés avec le bitume, l'étape de séchage étant caractérisée en ce qu'une partie de la fraction d'eau initiale présente sur les granulats demeure : dans ces cas également, une fois l'eau évaporée, la fluidité n'est plus assurée.

Le document US 6 588 974 décrit l'utilisation de paraffines Fischer-Tropsch ajoutées dans le bitume : si la température du bitume contenant la paraffine ou la température de l'enrobé descend au dessous de la température de cristallisation de la paraffine dans le bitume, la fluidité est impactée négativement.

En ce qui concerne les techniques utilisant l'ajout de polymères, il est connu qu'il est difficile d'incorporer des polymères dans du bitume, même aux bas dosages utilisés habituellement (par exemple de 3 à 6%). La compatibilité entre polymère et bitume est partielle, ce qui conduit habituellement à une séparation de phase dans le temps. De plus les procédés de mélange requièrent des hautes températures, des temps de mélange longs sous des conditions d'agitation sévères à cause de la forte viscosité des polymères de manière à obtenir une bonne dispersion du polymère dans le bitume. Les températures nécessaires sont généralement supérieures à celles utilisées pour le stockage et l'utilisation des bitumes non modifiés.

Par exemple, le document US 5 618 862 décrit un exemple dans lequel la dispersion d'un copolymère styrène-butadiène ayant une masse molaire de 100 000 Daltons à un dosage de 3,5% dans un bitume de pénétration 80/100 prend 2,5 heures à 175°C. Pour ce type de bitume, une température typique de stockage est de 140°C à 160°C.

La dispersion du polymère à haute température peut aussi entraîner une dégradation des propriétés du bitume en accélérant son oxydation. L'addition d'un agent de réticulation, comme les composés contenant du soufre, est habituelle pour la production des bitumes modifiés par des polymères, de manière à encore augmenter la masse molaire du polymère en formant un réseau chimique entre les molécules de polymère préexistantes. De tels réseaux augmentent la viscosité mais évitent la séparation de phase. Toutefois l'utilisation de composés soufrés à haute température pose des problèmes importants de sécurité.

Les difficultés mentionnées ci-dessus rendent ces procédés accessibles uniquement aux raffineurs et constructeurs routiers de taille importante, qui sont les seuls à même de réaliser les investissements nécessaires.

En effet, l'utilisation de bitumes modifiés par des polymères en vue de la fabrication de mélanges bitumineux nécessite généralement de modifier le procédé de production comparativement à ceux utilisés avec les bitumes purs. Dans le cas des émulsions par exemple, l'utilisation de polymères peut limiter le grade de bitume utilisable car l'émulsification se faisant en présence d'eau liquide, la température d'introduction du bitume est limitée.

Dans le cas des enrobés à chaud, des températures supérieures de fabrication, répandage et compactage sont nécessaires quand les bitumes modifiés par des polymères sont utilisés. La plus haute viscosité du bitume modifié polymère comparée à celle du bitume pur peut également entraîner des problèmes de procédé lorsque la température rencontrée est inférieure à 100°C et supérieure à la température ambiante, ces problèmes étant liés à la fluidité limitée du produit bitumineux.

Il serait donc particulièrement intéressant de disposer d'un additif qui permettrait la modification du bitume par des polymères sans augmentation importante de la température en comparaison du bitume pur, tout en obtenant une augmentation des performances mécaniques sur le produit bitumineux en résultant.

Or la demanderesse a découvert qu'il était possible d'obtenir des tensioactifs, obtenus à partir d'acides gras naturellement présents dans les végétaux, et ce, selon un procédé de préparation minimisant les effluents et les coûts énergétiques, ces tensioactifs étant utilisables et particulièrement efficaces dans les techniques de préparation de matériaux routiers bitumineux décrites ci-dessus.

En particulier, dans le procédé de l'invention, les produits de départ sont des matières premières issues de la biomasse. Les compositions à base d'un tel tensioactif sont biodégradables et permettent de fabriquer des produits bitumineux, sous forme émulsifiée ou non, particulièrement avantageux.

Les tensioactifs selon l'invention et les compositions les comprenant sont particulièrement efficaces dans des émulsions bitumineuses utilisées dans les techniques dites à froid de préparation de produits routiers, dans les liants anhydres bitumineux des techniques dites à chaud, les techniques dites tièdes et dans les techniques utilisant l'ajout de polymères.

Ainsi, et selon un premier aspect, la présente invention porte sur une composition bitumineuse comprenant au moins un liant bitumineux et au moins une composition comprenant :
i) de 50% à 100% en poids, par rapport au poids total de la dite composition, d'un tensioactif de formule (I) suivante :

   R-CO-O-(CH₂)₂-N⁺(R¹R²R³)X1⁻ (I)

   dans laquelle :
   R est une chaîne hydrocarbonée en C₄-C₃₂, de préférence en C₇-C₂₁, saturée ou insaturée, linéaire ou ramifiée, éventuellement hydroxylée,
   R¹, R² et R³ représentent chacun, indépendamment l'un de l'autre, un radical alkyle en C₁-C₄,
   X1 est un radical halogène ou mésyle,
ii) de 0 à 15%, en poids, par rapport au poids total de ladite composition, de HX1,
iii) de 0 à 40% en poids, par rapport au poids total de ladite composition, d'un acide gras de formule (III) R-CO-OH, et
iv°) de 0 à 40% en poids, par rapport au poids total de ladite composition, de composé de formule (IV) HO-(CH₂)₂-N⁺(R₁R₂R₃)X1⁻ ;
   composition dans laquelle i) + ii) + iii) + iv) représente 100% en poids du poids total de la composition.

Par halogène, on entend au sens de la présente demande, un atome de brome (Br), de chlore (Cl), de fluor (F) ou d'iode (I).

Par alkyle en C₁-C₄, on entend au sens de la présente demande, un radical alkyle linéaire ou ramifié comportant de 1 à 4 atomes de carbone, de préférence un radical méthyle, éthyle, n-propyle, iso-propyle, n-butyle, iso-butyle, et sec-butyle, de préférence encore un radical méthyle, éthyle, n-propyle, n-butyle et sec-butyle, de manière tout à fait préférée le radical méthyle ou éthyle.

De préférence R¹, R² et R³ sont identiques.

La présente invention porte également sur un procédé de préparation d'un tensioactif de formule (I) tel que défini précédemment, caractérisé en ce qu'on fait réagir un acide gras de formule (III) tel que défini précédemment R-CO-OH,

avec le produit de réaction a) du composé de formule (IV) tel que défini précédemment HO-(CH₂)₂-N⁺(R₁R₂R₃) Cl⁻ et b) de l'acide fort de formule HX1, tel que défini précédemment.

Le procédé selon l'invention ne nécessite pas l'emploi de réactifs toxiques et ne cause donc pas le rejet dans l'environnement de réactifs toxiques en excès.

Ainsi, les compositions selon l'invention comprennent au moins un tensioactif de formule (I) tel que défini précédemment.

Ce tensioactif est de préférence obtenu selon le procédé de préparation décrit plus haut.

Dans une forme de réalisation de l'invention, X1 est le radical mésyle et R¹, R² et R³ sont identiques et représentent chacun le radical méthyle:

Plus précisément, les esters gras de choline sont obtenus, de manière surprenante, à partir d'un acide gras et de chlorure de choline avec un léger excès molaire acide gras/chlorure de choline. Par léger excès, on entend un ratio molaire acide gras/chlorure de choline compris entre 1 et 2, de préférence compris entre 1 et 1,6.

Un excès d'acide protique fort HX1, tel que avantageusement l'acide méthanesulfonique, est ajouté à du chlorure de choline pur ou en solution aqueuse. Le ratio molaire acide protique fort/chlorure de choline est généralement compris entre 1,05 et 1,6, de préférence entre 1,05 et 1,3.

La réaction est généralement et avantageusement conduite à température ambiante et à pression atmosphérique. L'acide gras en léger excès est ensuite ajouté, et le milieu réactionnel est chauffé, typiquement à une température comprise entre 100 et 150°C, de préférence entre 100 et 140°C.

Comme on le verra plus loin, le les esters gras de choline peuvent non seulement être obtenus à partir d'acides gras monofonctionnels, mais aussi à partir d'acides gras de types dimères ou trimères. Les produits issus de ces réactions sont nouveaux et à ce titre font partie de la présente invention.

Avec les acides gras de types dimères ou trimères, les conditions de températures et de pression sont telles que décrites ci-dessus.

En revanche, le ratio molaire acide gras dimère/chlorure de choline est avantageusement compris entre 0,5 et 1 et préférentiellement entre 0,5 et 0,8, de préférence encore entre 0,3 et 0,7 et, de manière tout à fait préférée, entre 0,3 et 0,6.

Quel que soit l'acide gras utilisé, et afin de faciliter l'élimination de l'eau formée, il peut être envisagé d'opérer sous pression réduite, par exemple entre 10 mbar et 1000 mbar, de préférence entre 30 mbar et 800 mbar. Le brut réactionnel ne nécessite pas de purification et peut être utilisé directement dans les applications de la présente invention.

Dans les procédés décrits ci-dessus, il est également possible d'utiliser, comme source de choline, d'autres dérivés de choline parmi lesquels on peut citer, de manière non limitative, l'hydroxyde de choline, l'hydrogénocarbonate de choline. Ces dérivés peuvent être utilisés pur ou sous forme de solution aqueuse.

De même, il est possible d'utiliser un acide protique fort, comme catalyseur de la réaction, sous forme pure ou sous forme de solution, par exemple sous forme de solution aqueuse. À titre d'exemple, l'acide méthanesulfonique peut être utilisé sous forme pure, dite encore forme anhydre (AMSA, pour acide méthane sulfonique anhydre) ou encore sous forme de solution aqueuse en toutes proportions, une solution aqueuse à 70% en poids d'AMSA dans l'eau étant tout particulièrement préférée. Des mélanges d'acides protiques peuvent également être utilisés.

Selon un autre aspect, le procédé de préparation des esters gras de choline peut être réalisé à partir d'anhydride mixtes de formule suivante : 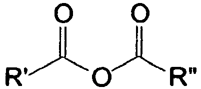 dans laquelle R' est le radical R précédemment défini (reste d'acide gras ou encore reste d'acide gras de type dimère ou trimère) et R" est une chaîne hydrocarbonée comportant de 1 à 3 atomes de carbone, saturée ou insaturée, linéaire ou ramifiée.

La réaction d'estérification à partir des anhydrides mixtes est généralement réalisée à une température comprise entre 50°C et 150°C, et l'acide léger qui se forme est avantageusement éliminé du milieu réactionnel selon des techniques classiques, par exemple par distillation sous pression réduite. Le ratio molaire anhydride mixte/chlorure de choline est dans ce cas avantageusement voisin de ou égale à 1.

À titre d'exemple, la préparation d'un ester gras de choline, à partir de chlorure de choline et d'un anhydride mixte, en présence d'AMS peut être schématisée comme suit :

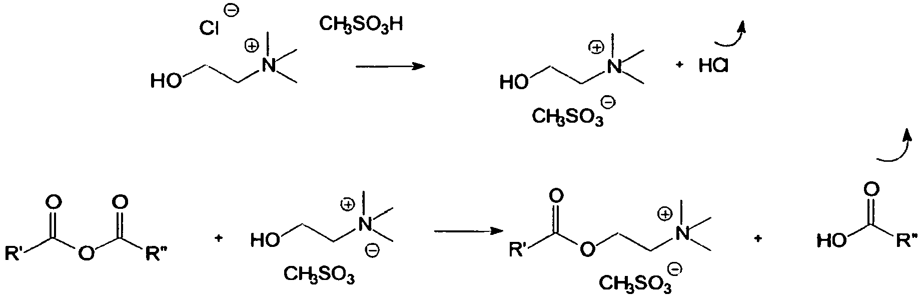

Les anhydrides mixtes qui peuvent être utilisés dans la réaction précédemment décrite sont soit disponibles dans le commerce, soit facilement préparés à partir de modes opératoires connus, ou par adapatation de modes opératoires connus de l'homme du métier, et par exemple :
- réaction d'un chlorure d'acide carboxylique sur un acide carboxylique.
- réaction d'un chlorure d'acide carboxylique sur un sel d'acide carboxylique.
- réaction d'un anhydride d'acide carboxylique sur un acide carboxylique.

De préférence, R est une chaîne issue d'acides gras présents dans les huiles végétales naturelles.

À titre d'exemples d'huiles végétales naturelles pouvant avantageusement fournir des acides gras pour réaliser le tensioactif selon l'invention, on peut citer l'huile de colza, l'huile de tournesol, l'huile de soja, l'huile de lin, l'huile de copra, l'huile de palme, l'huile de ricin, et leurs mélanges.

De préférence, R est une chaîne issue d'acides gras choisis parmi l'acide oléique, l'acide laurique, l'acide palmitique, l'acide ricinoléique, l'acide linoléique et leurs mélanges.

Dans une forme de réalisation de l'invention, R représente un radical CₙH₂ₙ₊ₓ dans laquelle 7 < n < 21 et x est -2, 0 ou 2. De préférence, R est issu de l'acide oléique technique.

Ainsi, dans une forme de réalisation de l'invention, le tensioactif présente la formule suivante (II) :

CH₃-(CH₂)₇-CH=CH-(CH₂)₇-CO-O-(CH₂)₂-N⁺(CH₃)₃(CH₃SO₃⁻) (II)

Les acides gras utilisés dans le procédé selon l'invention sont issus de végétaux qui sont des produits naturels et biodégradables. Ainsi, le rejet dans l'environnement d'éventuels excès de produits de départ n'est pas dommageable à l'équilibre de cet environnement. Par ailleurs, l'extraction de ces acides gras est simple et ne nécessite pas l'utilisation de réactifs dangereux ou toxiques ou de produits de synthèse.

Le composé de formule (IV) est de préférence le chlorure de choline, de formule suivante :

HO-(CH₂)₂-N⁺(CH₃)₃Cl⁻

Un tel produit est un produit naturel, peu toxique et biodégradable.

L'acide fort convenant au procédé selon l'invention est de préférence l'acide méthanesulfonique (encore appelé AMS). Un tel acide est biodégradable.

Dans une forme préférée de réalisation de l'invention, la composition selon l'invention comprend comme tensioactif de formule (I) le mésylate de 9-octadécénoate de choline, obtenu à partir de chlorure de choline, d'acide méthanesulfonique et d'acide oléique technique selon le procédé de l'invention comme suit :

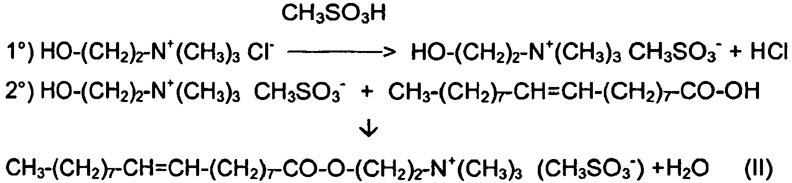

Ainsi, dans une forme de réalisation de l'invention, la composition, appelée « composition biodégradable » dans la suite, comprend :
i) de 50% à 100% en poids, par rapport de la composition de mésylate de 9-octadécénoate de choline,
ii) de 0 à 15% en poids, par rapport de la composition, d'acide méthanesulfonique,
iii°) de 0 à 40% d'acide oléique résiduel, et
iv°) de 0 à 40% de mésylate de choline résiduel,
   composition dans laquelle i) + ii) + iii) + iv) représente 100% en poids du poids total de la composition.

Le composé de formule (I) ou les compositions biodégradables comprenant au moins un composé de formule (I) telles que définies précédemment peuvent être incorporés dans divers produits bitumineux.

Ainsi, un aspect de l'invention concerne une composition bitumineuse, par exemple sous forme d'émulsion, comprenant au moins un liant bitumineux et au moins un composé (ou tensioactif) de formule (I) ci-dessus, de préférence de formule (II), ou une composition biodégradable telle que décrite ci-dessus. De préférence, la teneur en tensioactif de formule (I), de préférence de formule (II), dans ladite composition, par exemple émulsion, va de 0,15 à 2,5% en poids, par rapport au poids total de la composition, de l'émulsion, respectivement.

Les émulsions sont obtenues par ajout d'eau, de préférence en quantité comprise entre 20% et 60% en poids d'eau par rapport à l'ensemble (liant bitumineux + composé de formule (I) ou composition biodégradable), c'est-à-dire la composition sous forme anhydre.

De préférence, la teneur en liant bitumineux dans ladite composition va de 45% à 85% en poids, de préférence de 60% à 70% en poids, par rapport au poids total de composition.

La composition bitumineuse, en particulier lorsqu'il s'agit d'une émulsion bitumineuse, peut comprendre en outre au moins un cotensioactif choisi parmi les tensioactifs anioniques, les tensioactifs cationiques, les tensioactifs non ioniques et leurs mélanges.

Le pH de la phase aqueuse préparée avec le tensioactif de formule (I) ou la composition biodégradable selon l'invention peut être ajusté entre 1,5 et 3,5 par un acide fort ou faible, préférentiellement de l'acide chlorhydrique. On pourrait cependant très bien utiliser ce tensioactif de formule (I) ou la composition biodégradable selon l'invention sans ajuster le pH de la phase aqueuse.

La phase aqueuse ainsi préparée est ensuite mélangée avec du bitume ou liant bitumineux chaud (la température est fixée en fonction des caractéristiques rhéologiques du bitume) à l'aide d'un dispositif connu de l'homme de l'art pour fabriquer des compositions, en particulier des émulsions, de bitume (moulin colloïdal, turbine, mélangeur statique par exemple). Le tensioactif de formule (I) ou la composition biodégradable peut également être introduit dans le liant bitumineux avant émulsification à une concentration allant de 0,1% à 1% en poids, par rapport au poids de bitume, de préférence à une concentration allant de 0,1% à 0,5%, en poids, par rapport au poids de bitume.

Selon la teneur en liant bitumineux et les caractéristiques rhéologiques de ce liant, la composition, et en particulier l'émulsion, pourra être fabriquée sous pression. La teneur en liant dans la composition finale, respectivement l'émulsion finale, peut être comprise entre 45% et 85%, plus généralement entre 60% et 70%, en poids par rapport au poids de l'émulsion finale. Les liants bitumineux généralement utilisés sont des bitumes naphténiques ou parafiniques de pénétrabilité comprise entre 70 et 220. Ils peuvent être modifiés par ajout de polymères pour en améliorer les performances et éventuellement dilués par ajouts de fluxants d'origine pétrolière ou végétale. Ils peuvent être additivés pour en améliorer certaines propriétés. L'utilisation de liants synthétiques ou d'origine végétale ne sortirait en rien de cette invention.

De telles compositions bitumineuses, en particulier émulsions bitumineuses, peuvent être utilisées pour la fabrication de divers produits bitumineux, pour applications routières ou d'enduits d'étanchéité, tels que par exemple enduits ou couches d'accrochage, enrobés stockables ouverts, grave émulsions, ou encore enrobés denses à froid.

Ainsi, un aspect de la présente invention porte sur un enduit superficiel ou une couche d'accrochage, comprenant une composition ou émulsion bitumineuse telle que décrite ci-dessus. Dans de tels enduits ou couches d'accrochage, la teneur en tensioactif de formule (I) dans la compositon, l'émulsion respectivement, va de préférence, de 0,15% à 0,4%, en poids, par rapport au poids de l'émulsion.

Un autre aspect de la présente invention porte sur des enrobés stockables ouverts, comprenant une composition, en particulier émulsion bitumineuse telle que décrite ci-dessus. Dans de tels enrobés stockables ouverts, la teneur en tensioactif de formule (I) dans la composition (l'émulsion) va de préférence, de 0,4% à 1%, en poids, par rapport au poids de la composition.

Un autre aspect de la présente invention porte sur des grave émulsion, enrobés denses à froid, recyclage ou enrobés coulés à froid, comprenant une composition, en particulier émulsion bitumineuse, telle que décrite ci-dessus. Dans de tels grave émulsions, enrobés denses à froid, recyclage ou enrobés coulés à froid, la teneur en tensioactif de formule (I) dans la composition (l'émulsion) bitumineuse a de préférence, de 0,4% à 2,5%, en poids, par rapport au poids de la composition.

On peut bien entendu envisager, sans sortir du cadre de l'invention, d'incorporer une composition dans le bitume avant émulsification avec cette même composition comme émulsifiant ou un émulsifiant de nature différente pour améliorer la mise en émulsion du bitume et les propriétés de l'émulsion lors de l'application et notamment l'adhésivité du liant sur les granulats après rupture. La quantité introduite dans le bitume sera alors de l'ordre de 0,1% à 0,5% massique par rapport au bitume et la quantité d'émulsifiant dépendra de l'application visée.

Un autre aspect de l'invention est l'utilisation d'un tensioactif de formule (I), de préférence de formule (II), tel que décrit ci-dessus ou d'une composition biodégradable telle que décrite ci-dessus comme dope d'adhésivité dans des liants pour les applications routières utilisant des liants anhydres.

Un autre aspect de l'invention est une composition bitumineuse comprenant :
1) au moins un liant bitumineux,
2) au moins un tensioactif de formule (I) tel que défini précédemment.
ou une composition telle que décrite ci-dessus,
sans addition d'eau (i.e. il ne s'agit pas d'une émulsion).

Une telle composition bitumineuse est dénommée liant anhydre bitumineux, dans la suite du présent exposé.

Un autre aspect de l'invention porte sur une composition à base de di- ou tri-esters de choline dont des exemples de représentation sont donnés ci-dessous avec les tri-esters de choline sur chaîne alkyle à 51 atomes de carbone (A) ou 19 atomes de carbone (B) sur base acide trimère en C₅₄ ou triacide carboxylique en C₂₂ et les di-esters de choline sur chaîne alkyle à 34 atomes de carbone (C) ou 19 atomes de carbone (D) sur base acide dimère en C₃₆ et diacide carboxylique en C₂₁ : 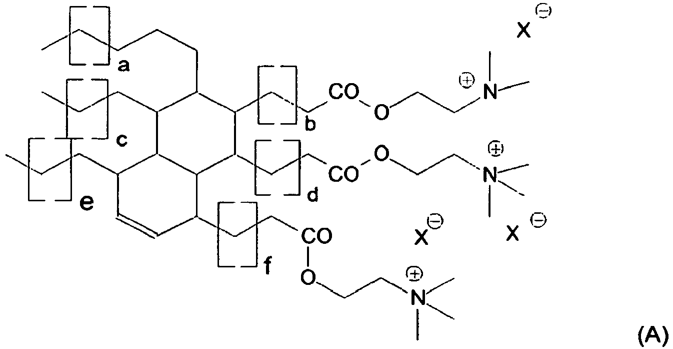 avec a+b+c+d+e+f=30 et X1 = halogène, mésyle ; 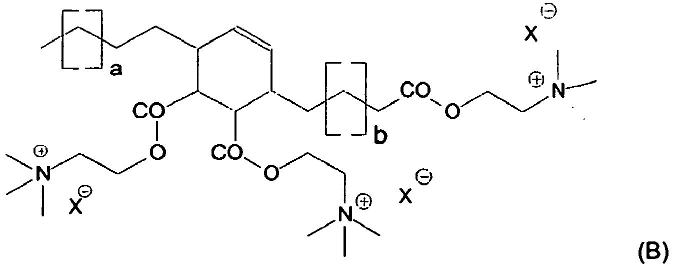 avec a+b =8 et X1 = halogène, mésyle ; 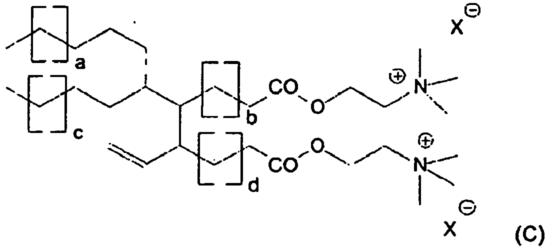 avec a+b+c+d= 20 et X1 = halogène, mésyle ; 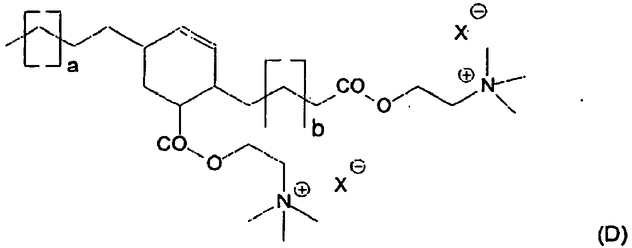 avec a+b =8 et X1 = halogène, mésyle.

Ces compositions à base de di- ou tri-esters de choline sont particulièrement actives en tant que dope d'adhésivité pour liant dans les applications routières utilisant des liants anhydres. Ces composés A à D peuvent également être utilisés comme tensioacitfs dans les émulsions bitumineises décrites précédemment.

Ainsi, un autre aspect de l'invention porte sur l'utilisation d'une composition bitumineuse telle que définie précédemment, et en particulier comprenant un tri-ester de choline sur chaîne alkyle à 51 atomes de carbone de formule générale (A), ou d'un tri-ester de choline sur chaîne alkyle à 19 atomes de carbone de formule générale (B), ou d'un di-ester de choline sur chaîne alkyle à 34 atomes de carbone de formule générale (C), ou encore d'un diester de choline sur chaîne alkyle à 19 atomes de carbone de formule générale (D), tels que définis précédemment, en tant que dope d'adhésivité pour liant anhydre utilisé dans les techniques de préparation de matériaux routiers bitumineux.

Bien entendu des mélanges de deux ou plusieurs composés A à D, en toutes porportions peuvent également être utilisés.

Suivant le procédé décrit ci-dessus, ces produits peuvent être obtenus à partir de produits de départ essentiellement renouvelables et on pourra utiliser alors des bruts réactionnels de composition massique suivante :
i) 50% à 100% d'halogénure ou mésylate de di- ou tri-ester gras de choline ;
ii) 0 à 15% d'acide de type HX1 (X1 = halogène, mésyle) ;
iii) 0 à 40% de polyacide gras résiduel ; et
iv) 0 à 40% d'halogénure ou mésylate de choline résiduel ;
   dans lesquels i) + ii) + iii) + iv) représente 100% en poids du poids total du brut réactionnel.

Ces compositions à base de di-esters ou de tri-esters peuvent être combinées avec un produit de formule chimique

R-O-((CH₂CH(CH₃)O)ₐ(CH₂CH₂O)_{b})_{c}P(=O)-OH_{d}

où P représente l'atome de phosphore, c est compris entre 1 et 2, c+d est égal à 3, a est compris entre 0 et 3, b est compris entre 0 et 6 et R représente une chaîne hydrocarbonée possédant 6 à 30 atomes de carbone ; et ainsi on obtient une composition qui reste dans le cadre de la présente invention.

Les compositions ou les composants de ces compositions lorsqu'ils peuvent exister à l'état séparé selon l'invention peuvent-être introduits dans le liant chaud à tous niveaux ensemble ou de manières séparées (dans la cuve à bitume, en injection en ligne dans le bitume, dans le malaxeur contenant les granulats avant, pendant ou après l'ajout du bitume, pour une répandeuse avant, pendant ou après la pulvérisation du liant anhydre, ou encore avant, pendant ou après l'opération d'émulsification) à des dosages massiques compris entre 0,05% et 2% et préférentiellement entre 0,15% et 0,5% par rapport à la masse du bitume, et préférentiellement préalablement à son application.

Elles ne perdent pas leur activité même après 7 jours de stockage à chaud en mélange avec le liant.

Elles trouvent une utilité dans toutes les applications de bitumes, et en particulier où une amélioration des propriétés adhésives du liant vis à vis du granulat ou du support minéral sur lequel il est répandu est souhaitable ou nécessaire.

Ces applications sont par exemple les couches d'accrochage, les enrobés à chaud, les enrobés au bitume fluidifié ou fluxé, les enrobés à la mousse de bitume, les enduits superficiels au bitume fluidifié ou fluxé.

Les liants anhydres concernés sont en règle générale des bitumes naphténiques ou parafiniques de pénétrabilité comprise entre 10 et 220. Il arrive que des bitumes plus durs ou plus mous soient utilisés, ou des liants synthétiques ou végétaux et on ne sortirait en rien de l'invention en utilisant de tels liants. Ils peuvent être modifiés par ajout de polymères pour en améliorer les performances mécaniques et éventuellement dilués par ajouts de fluxants ou fluidifiants d'origine pétrolière ou végétale dont de nombreux exemples sont cités dans le brevet FR 2 879 611. Ces fluidifiants peuvent être « siccatifs » comme ceux décrits par exemple dans le brevet FR 2 768 150.

La substitution, dans les techniques citées, lorsqu'elle est pertinente, de tout ou partie des granulats frais par des agrégats d'enrobé (définis par exemple dans le standard AFNOR XP P98-135, de décembre 2001) dans le cadre d'opérations de recyclage ne sortirait en rien du champ de la présente invention.

Pour baisser les températures dans les enrobés routiers comportant une étape de mélange de bitume et granulats, il a été trouvé par la demanderesse de manière surprenante qu'il est avantageux d'utiliser une composition bitumineuse selon l'invention comprenant :
- i°) au moins un liant bitumineux,
- ii°) au moins un tensioactif de formule (I) tel que défini précédemment et/ou
   au moins une composition biodégradable telle que décrite ci-dessus, et
- iii°) et au moins un additif choisi parmi :
   ➢ A1: le produit dont la formule chimique est R-O-((CH₂CH(CH₃)O)ₐ-(CH₂CH₂O)_{b})_{c}P(=O)-OH_{d} avec P l'atome de phosphore, c compris entre 1 et 2, c+d égal à 3, a compris entre 0 et 3, b compris entre 0 et 6 et R représentant une chaîne hydrocarbonée possédant 6 à 30 atomes de carbone,
   ➢ B1 : le produit de la réaction de (di)alk(én)ylphénols sur aldéhydes, les aldéhydes comportant de 1 à 10 atomes de carbone et plus particulièrement de 1 à 5 atomes de carbone, et plus particulièrement le paraformaldéhyde ou l'acétaldéhyde, suivie d'une (poly)oxyéthylation et/ou (poly)oxypropylation, les groupements alk(én)yl ayant entre 1 et 50 atomes de carbone, et de préférence entre 2 et 20 atomes de carbone, et plus particulièrement de 3 à 12 atomes de carbone, et pouvant être identiques ou différents dans le cas de dialk(én)ylphénols, la partie construite par (poly)oxyéthylation et/ou (poly)oxypropylation ayant une masse molaire supérieure ou égale à 45 g/mol et inférieure à 20 000 g/mol, le nombre de motifs phénoliques du produit A B1 variant entre 3 et 50,
   ➢ C1: copolymère 2,2-bis(4-hydroxyphenyl)propane-epichlorhydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 g/mol,
   ➢ D1: copolymère bis(4-hydroxyphenyl)éthane-epichlorhydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 g/mol,
   ➢ E1 : copolymère bis(4-hydroxyphenyl)méthane-epichlorhydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 g/mol,
   ➢ F1 : le produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone et préférentiellement entre 1 et 10, l'ensemble des parties construites par (poly)oxyéthylation et/ou (poly)oxypropylation ayant une masse molaire supérieure à 100 g/mol et inférieure à 20 000 g/mol,
   ➢ G1 : le produit de la (poly)oxyéthylation et/ou (poly)oxypropylation d'un acide gras dont le nombre d'atomes de carbone est compris entre 10 et 30, et plus particulièrement sur l'acide gras de tall oil, la partie construite par (poly)oxyéthylation et/ou (poly)oxypropylation ayant une masse molaire supérieure à 100 g/mol et inférieure à 20 000 g/mol,
   ➢ H1 : le produit de la réaction entre le produit B1 et le mélange des produits F1 et G1,
   ➢ I1 : sel d'acide alk(én)yl(aryl) sulfonique et d'alk(én)yl(aryl)amine, les motifs alk(én)yl(aryl) comportant un nombre d'atome de carbone compris entre 6 et 30, et plus particulièrement le sel d'acide dodécylbenzènesulfonique et d'amine de suif, ainsi que le sel d'acide dodécylbenzènesulfonique et de cyclohéxylamine,
   ➢ J1 : sel d'acide alk(én)yl(aryl) sulfonique et de morpholine ou pyrazine ou pyrazoline ou pyrazolone ou pyridine ou pyridone ou pyrimidine ou pyrrole ou pyrrolidine ou pyyrolidone ou pyrroline ou toluidine ou imidazole ou indol ou indoline ou oxindole, les motifs alk(én)yl(aryl) comportant un nombre d'atome de carbone compris entre 6 et 30, et plus particulièrement le sel d'acide dodécylbenzènesulfonique et de morpholine,
   ➢ K 1 : copolymère(s) oxyde d'éthylène - oxyde de propylène, statistique ou à blocs, de masse molaire comprise entre 500 g/mol et 20.000 g/mol, de ratio massique (oxyde d'éthylène sur copolymère) compris entre 1% et 70%, seul ou en mélange avec d'autres membres de cette classe.

La teneur en additif A1, B1, C1, D1, E1, F1, G1, H1, I1, J1, K1 au sein de ladite composition bitumineuse peut aller de 0,05% à 1% en poids, par rapport au poids du liant bitumineux.

Alternativement, la composition peut comprendre un composé de formule (A) et/ou (B) et/ou (C) et/ou (D) et/ou un ou plusieurs bruts réactionnels décrits ci-dessus contenant une de ces compositions (A), (B), (C), (D), tels que décrits ci-dessus en lieu et place ou en addition du tensioactif de formule (I) et/ou de la composition biodégradable.

De préférence, la teneur en additif(s) utilisé(s) de formule (I), (A), (B), (C), (D), A1, B1, C1, D1, E1, F1, G1, H1, I1, J1, K1 au sein des compositions bitumineuses va de 0,05 à 1% en poids, par rapport au poids du liant bitumineux.

La composition peut comprendre de plus au moins un dope d'adhésivité conventionnel à une teneur au sein de ladite composition bitumineuse comprise entre 0,05% à 1% en poids, par rapport au poids du liant bitumineux.

En outre, de l'eau peut être ajoutée, dans les proportions précédemment décrites aux fins d'obtenir des émulsions bitulmineuses, comprenant au moins un composé choisis parmi les composés A à D précédemment définis.

Les compositions ou les composants de ces compositions lorsqu'ils peuvent exister à l'état séparé selon l'invention peuvent-être introduits dans le liant chaud à tous niveaux ensemble ou de manières séparées sous forme solide, liquide, dispersée notamment avec de l'eau, en solution notamment avec de l'eau, par exemple dans la cuve à bitume, en injection en ligne dans le bitume, dans le malaxeur contenant les granulats, avant, pendant ou après l'ajout du bitume.

On ne sortirait pas du cadre de la présente invention dans le cas où l'on utilise les compostions bitumineuses décrites ci-dessus comme liant bitumineux avec les procédés connus de l'homme de l'art pour mélanger granulats et liants bitumineux.

On ne sortirait pas du cadre de la présente invention dans le cas où le bitume est modifié par ajout de polymères pour en améliorer les performances mécaniques ou par ajout de dopes d'adhésivité, généralement des tensioactifs anioniques, cationiques ou amphotères, comme par exemples ceux contenant des groupements fonctionnels chimiques amines, amidoamines, imidazolines, esters phosphoriques, acide gras et mélanges de ces produits.

D'autres exemples possibles d'additifs pouvant être ajoutés aux bitumes sont par exemple choisis parmi les paraffines Fischer-Tropsch décrites dans US 6,588,974, les esters d'acides gras et de cires fonctionnalisées, ainsi que les dialkyldiamides décrites par exemple dans WO 2007/073378, les fluxants, les polymères conventionnels, tel que polybutadiène, poly-isoprène, polychloroprène et leurs versions hydrogénées, polyisobutylène, copolymères à blocs du polybutadiène et de l'isoprène avec le styrène, ainsi que leurs versions hydrogénées comme le poly styrène-b-butadiène (SB), le poly styrène-b-butadiène-b-styrène (SBS), le poly styrène-b-isoprène-b-styrène (SIS), les poly styrène-b-(isoprène-stat-butadiène)-b-styrène ou poly styrène-b-isoprène-b-butadiène-b-styrène (SIBS), le SBS hydrogéné (SEBS), le poly styrène-b-butadiène-b-méthyl méthacrylate (SBM), ainsi que sa version hydrogénée (SEBM), le poly méthylméthacrylate-b-acrylate de butyle-b-méthyl méthacrylate (MAM), le poly styrène-b-acrylate de butyle-b-styrène (SAS), les copolymères statistiques du butadiène avec le styrène (SBR) et l'acrylonitrile (NBR) et leurs versions hydrogénées, les caoutchoucs butyle ou halogénés, les polyéthylènes, les polypropylènes, les copolymères éthylène-alcool vinylique, les copolymères d'éthylène-propylène et d'éthylène-propylène-diène (EPDM), les copolymères de l'éthylène avec des monomères acryliques et vinyliques comme les copolymères d'éthylène et acétate de vinyle, les copolymères d'éthylène, acétate de vinyle, et anhydride maléique, disponibles auprès de la société ARKEMA sous la dénomination commerciale OREVAC^{®}, les copolymères d'éthylène, ester acrylique, les copolymères d'éthylène, ester acrylique, anhydride maléique, les copolymères d'éthylène, ester acrylique, ester acrylique fonctionnel comme l'acrylate ou méthacrylate de glycidyle, disponibles auprès de la société ARKEMA sous la dénomination commerciale LOTADER^{®}, des polymères ou copolymères acryliques souples comme les résines à base d'esters méthacryliques telles que le polyacrylate de butyle et ses copolymères avec le styrène, ou d'autres monomères acryliques ou vinyliques, ainsi que leurs mélanges, les huiles d'origine végétale ou minérale et leurs dérivées, l'acide polyphosphorique, l'acide orthophosphorique, l'acide pyrophosphorique.

Un autre aspect de l'invention porte sur une composition bitumineuse comprenant :
- i°) au moins un liant bitumineux,
- ii°) au moins un tensioactif de formule (I) tel que défini précédemment
et/ou
une composition biodégradable telle que décrite ci-dessus, et
- iii°) au moins un composant capable de former un réseau supramoléculaire.
- iv°) et éventuellement un ou plusieurs composant A1, B1, C1, D1, E1, F1, G1, H1, I1, J1, K1.

Alternativement, la composition peut comprendre un composé de formule (A) et/ou (B) et/ou (C) et/ou (D) et/ou un ou plusieurs bruts réactionnels décrits ci-dessus contenant une de ces compositions (A), (B), (C), (D) tels que décrits ci-dessus en lieu et place ou en addition du tensioactif de formule (I) et/ou de la composition biodégradable.

En outre, de l'eau peut être ajoutée, dans les proportions précédemment décrites aux fins d'obtenir des émulsions bitulmineuses, comprenant au moins un composant capable de former un réseau supramoléculaire.

De manière surprenante, la composition bitumineuse de l'invention présente des propriétés mécaniques améliorées en comparaison de celles utilisant le bitume pur et aussi dans les produits bitumineux qui utilisent cette composition bitumineuse, comme par exemple les enrobés pour le domaine routier, aéroportuaire, urbain, les couches d'accrochage, les enduits superficiels, l'étanchéité ainsi que les applications utilisant des adhésifs bitumineux.

La présente invention présente l'avantage que le mélange entre le polymère supramoléculaire et le bitume est effectué à une température identique à celle à laquelle le bitume pur est stocké. L'incorporation du polymère est grandement facilitée grâce à sa faible viscosité à haute température. De substantiels gains en température, temps de mélange, énergie de mélange sont accomplis pour le disperser dans le bitume en comparaison des bitumes modifiés par des polymères standards.

Le dosage en polymère supramoléculaire dans les compositions bitumineuses de la présente invention est compris dans la fourchette 0,05% à 20% en masse par rapport au bitume.

De préférence, la teneur en additif utilisé de formule (I), (A), (B), (C), (D), A1, B1, C1, D1, E1, F1, G1, H1, 11, J1, K1 au sein des compositions bitumineuses est comprise entre 0,05% et 1% en poids, par rapport au poids du liant bitumineux.

On ne sortirait pas du cadre de la présente invention par ajout dans la composition bitumineuse de dopes d'adhésivité, généralement des tensioactifs anioniques, cationiques ou amphotères, comme par exemples ceux contenant des groupements fonctionnels chimiques amines, amidoamines, imidazolines, esters phosphoriques, acide gras et mélanges de ces produits.

Les composants, compositions ou les composants de ces compositions lorsqu'ils peuvent exister à l'état séparé selon l'invention peuvent-être introduits dans le liant chaud à tous niveaux ensemble ou de manières séparées sous forme solide, liquide, dispersée notamment avec de l'eau, en solution notamment avec de l'eau : dans la cuve à bitume, en injection en ligne dans le bitume, dans le malaxeur contenant les granulats, avant, pendant ou après l'ajout du bitume.

Préférentiellement, la composition bitumineuse décrite dans la présente invention contient comme polymère supramoléculaire le résultat de la réaction entre :
(1a) un groupe fonctionnel de formule (1) à (4) : 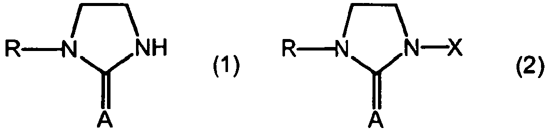 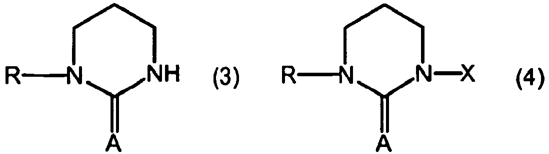 où
   A = oxygène, soufre ou NH, préférentiellement l'oxygène ;
   X = groupe quelconque, par exemple une chaîne grasse substituée ;
   R = groupe contenant une amine primaire, une amine secondaire ou un groupe fonctionnel alcool ;
   ou bien
(1b) un groupe fonctionnel de formule (5) ou (6) : 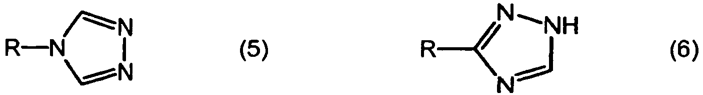 où
   R = groupe fonctionnel contenant une amine primaire, une amine secondaire ou un alcool ;
   et avec (2) au moins un monomère d'acide gras comprenant au moins une fonction réactive, un dimère d'acide gras identiques ou différents et/ou un trimère d'acide gras identiques ou différents, de préférence un dimère ou un trimère d'acides gras, un dérivé d'acide gras tel qu'un ester d'acide gras ou un chlorhydrate d'acide gras.

Plus particulièrement, le polymère supramoléculaire utilisable selon l'invention est issu de la réaction entre la 2-aminoéthylimidazolidin-2-one (UDETA) et/ou 3-amino 1,2,4 triazole et un mélange contenant :
- de 51% à 100% en poids d'un ou plusieurs dimère d'acide gras identiques ou différents et/ou d'un ou plusieurs trimères d'acide gras identiques ou différents ; et
- de 0 à 49% en poids d'un ou plusieurs monomères d'acides gras identiques ou différents et/ou d'un ou plusieurs oligomères supérieurs d'acide gras identiques ou différents. Un oligomère supérieur d'acide gras a une masse moléculaire plus grande que le trimère d'acide gras correspondant. Il s'agit du tétramère, du pentamère, etc... dudit acide gras.

Les liaisons hydrogène dans le polymère supramoléculaire se font entre deux fonctions identiques ou différentes choisies parmi les fonctions (1) à (6). Les atomes de carbone sur les formules (1) à (6) peuvent être substitués.

Certaines des molécules contenant au moins un motif (1) à (4) ci-dessus et au moins une fonction amine primaire ou secondaire ou alcool comprennent des motifs correspondant à la réaction de l'urée avec un composé contenant des fonctions NH2 ou NH séparées par 2 ou 3 atomes de carbone et plus précisément à la réaction de l'urée avec des alkylèneamines, des amines, des aminoalcools ou des amides. On peut citer par exemple les molécules comprenant les motifs (1) qui proviennent de la réaction de l'urée avec une polyalkylèneamine, comme, par exemple :
- la molécule UDETA : 2-aminoéthylimidazolidin-2-one ou 1-(2-aminoéthyl)-imidazolidin-2-one issue de la réaction de l'urée avec la diéthylène triamine (DETA) ;
- la molécule UTETA: 1-(2-[(2-aminoéthyl)amino]éthyl)imidazolidin-2-one issue de la réaction de l'urée avec la triéthylène tétramine (TETA) ; et
- la molécule UTEPA :1-(2-{2-[(2-aminoéthylamino]éthyl}amino)éthyl]imidazolidin-2-one issue de la réaction de l'urée avec la tétraéthylène pentamine (TEPA).

On peut citer comme autres exemples de molécules contenant au moins un motif (1) à (5) ci-dessus èt au moins une fonction amine primaire ou secondaire ou alcool, celles issues de la réaction de l'urée ou de la thiourée avec :
- différentes polyamines telles que la dipropylènetriamine, la di(1,2-butylène)triamine, la di-(2,3-butylène)triamine, la N-méthyldiéthylènetriamine, la N-éthyldiéthylènetriamine, la triéthylènetétramine ;
- des amino-alcools, tels que l'éthanolamine, le propanolamine, le 2-[(2-aminoéthyl)amino]éthanol.

Les acides gras utilisés pour cette réaction peuvent être saturés ou insaturés avec au moins 5 atomes de carbone, comme par exemple les monoacides linéaires laurique, myristique, oléique, stéarique, linoléique, linolénique, les monoacides branchés comme l'acide 2-ethyl hexanoique, les diacides linéaires comme par exemple l'acide glutarique, l'acide adipique, l'acide pimélique, l'acide subérique, l'acide azélaïque, l'acide sébacique, undécanedioique, dodécanedioique, brassylique, tetradécanedioique, pentadecanedioique, thapsique, ou octadécanedioique, les diacides branchés comme l'acide 3,3-dimethylglutarique et de manière préférée les mélanges d'acides gras dimères et trimères résultant de l'oligomérisation d'acides gras insaturés d'orgine végétale comme par exemple les acides undecylenique, myristoleique, palmitoleique, oléique, linoléique, linolénique, ricinoléique, eicosenoique ou docosenoique (que l'on trouve notamment dans les huiles de pin, colza, maïs, tournesol, soja, pépins de raisin et jojoba) ou d'origine animale comme par exemple les acides eicosapentaenoique ou docosahexaenoique (que l'on trouve dans l'huile de poisson).

En tant qu'exemples préférés d'acides gras, on peut citer des acides gras contenant des molécules insaturées, par exemple de type oléïque et qui ont été oligomérisés par réaction de condensation sur les doubles liaisons, conduisant, ainsi à des mélanges essentiellement constitués de dimères et de trimères. Par dimères ou trimères d'acides gras, on entend des oligomères de 2 ou 3 monomères, identiques ou différents.

Avantageusement, ces acides gras, saturés ou insaturés, comportent de 12 à 100 atomes de carbones et encore plus avantageusement entre 24 et 90 atomes de carbone.

Les mélanges d'oligomères d'acides gras contiennent, en général, un certain taux de dimères et de trimères d'acides gras. La proportion d'acide gras monomère et d'oligomères supérieurs d'acides gras (tétramère, pentamère, etc...) est moindre par rapport à la proportion de dimères d'acide gras et de trimères d'acides gras. De plus, le ratio dimère/trimère d'acide gras a une certaine influence sur les propriétés des polymères dont le taux de cristallinité et/ou la vitesse de cristallisation.

On peut citer comme exemples de dimère, les dimères cycliques ou les dimères linéaires, dont ceux à partir d'acides gras à 18 atomes de carbone, dits acides en C₁₈.

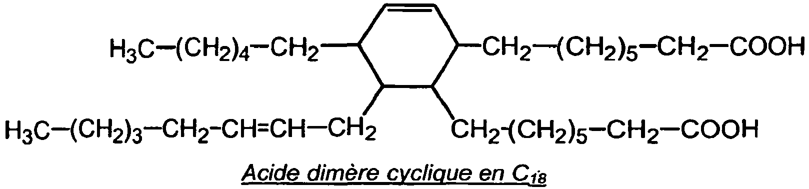

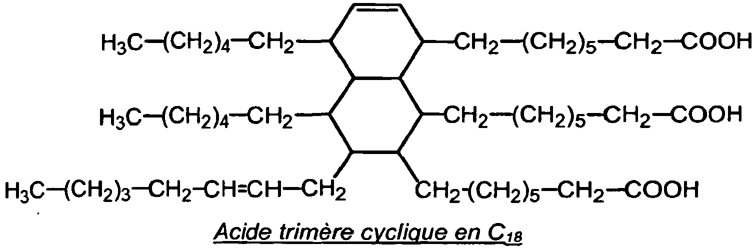

Un mélange préféré d'oligomères d'acides gras contient des dimères, trimères et des monomers d'acides gras en C₁₈ (linéraires ou cycliques), avec une composition majoritaire en dimères et trimères et une minorité de monomères. Un mélange préféré comprend :
- de 0,1% à 40% en masse, préférentiellement de 0,1% à 10% en masse de monomères d'acides gras identiques ou différents ;
- de 0,1% à 99% en masse, préférentiellement de 18% à 98% en masse de dimères d'acides gras identiques ou différents ;
- de 0,1% to 85% en masse, préférentiellement de 2% à 70% en masse de trimères d'acides gras identiques ou différents ;

On peut citer, comme exemples de mélanges dimères/trimères d'acide gras (% en poids) :
- le Pripol® 1017 d'Uniqema, mélange de 75-80% de dimères et 18-22% de trimères avec de l'ordre de 1-3 % d'acide gras monomère ;
- le Pripol® 1048 d'Uniqema, mélange de 50/50% de dimères/trimères ;
- le Pripol® 1013 d'Uniqema, mélange de 95-98% de dimères et de 2-4% de trimères avec 0,2 % maximum d'acide gras monomère ;
- le Pripol® 1006 d'Uniqema, mélange de 92-98% de dimères et d'un maximum de 4% de trimères avec 0,4 % maximum d'acide gras monomère ;
- l'Unidyme® 60 d'Arizona Chemicals, mélange de 33% de dimères et de 67% de trimères avec moins de 1% d'acide gras monomère ;
- l'Unidyme® 40 d'Arizona Chemicals, mélange de 65% de dimères et de 67% de trimères avec moins de 1% d'acide gras monomère ;
- l'Unidyme® 14 d'Arizona Chemicals, mélange de 94% de dimères et de moins de 5% de trimères et autres oligomères supérieurs avec de l'ordre de 1% d'acide gras monomère ;
- l'Empol® 1008 de Cognis, mélange de 92% de dimères et de 3% d'oligomères supérieurs essentiellement des trimères avec de l'ordre de 5% d'acide gras monomère ;
- l'Empol® 1018 de Cognis, mélange de 81 % de dimères et de 14% d'oligomères supérieurs dont essentiellement des trimères avec de l'ordre de 5 % d'acide gras monomère ; et
- le Radiacid® 0980 d'Oleon, mélange de l'ordre de 18% de dimères et de 82% de trimères.

Les polymères supramoléculaires utilisés dans cette invention peuvent aussi être le résultat de la réaction de structures (1) à (6) avec des dérivés d'acide gras comme par exemple des esters d'acide gras ou des chlorhydrates d'acides gras. Un ester d'acide gras préféré est l'ester méthylique d'acide gras, en particulier l'ester méthylique d'un dimère d'acide gras ou d'un mélange d'oligomères d'acides gras comme décrit plus haut. Un exemple de chlorure d'acide gras est le chlorure de sébaçoyle.

Comme exemple de polymère supramoléculaire semicristallin de cette invention, on peut citer le polymère avec la structure suivante, qui a été obtenu par la réaction d'acide gras dimère et d'UDETA :

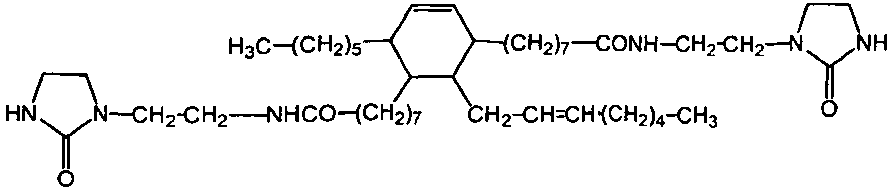

On peut citer comme autres exemples de polymères supramoléculaires selon l'invention :
- Le Supra1008 issu de la réaction entre l'Empol®1008 et l'UDETA ;
- Le Supra1060 issu de la réaction entre l'Unidyme® 60 et l'UDETA ;
- Le Supra 1060/1008 issu de la réaction entre l'Empol®1008, l'Unidyme® 60 et l'UDETA ;
- Le Supra 1017 issu de la réaction entre le Pripol® 1017 et l'UDETA ;
- Le Supra 1048 issu de la réaction entre le Pripol® 1048 et l'UDETA ;
- Le Supra 1014 issu de la réaction entre l'Unidyme® 14 et l'UDETA ; et
- Le Supra 0980 issu de la réaction entre le Radiacid® 0980 et l'UDETA.

Une autre variable de synthèse de ces polymères supramoléculaires semi-cristallins pouvant avoir une influence sur les propriétés thermomécaniques du polymère supramoléculaire ainsi que de la composition bitumineuse le contenant est la proportion stoechiométrique entre les molécules contenant au moins un motif (1) à (6) et les molécules d'acide gras (acide gras monomère, dimère d'acide gras, trimère d'acide gras, oligomères supérieurs d'acide gras et leurs mélanges), ayant été utilisées pour leur synthèse.

Ainsi, par exemple, dans le cas de la molécule UDETA, le nombre de fonctions amines réactives avec les fonctions acides de l'acide gras utilisé, peut être ajusté de manière à se situer dans des proportions stoechiométriques, c'est-à-dire, une amine (ou une molécule d'UDETA) pour chaque groupe acide ou, alors dans des proportions non-stoechiométriques, c'est-à-dire en défaut ou en excès d'amine (et donc, d'UDETA) par rapport aux groupes acides. Par exemple, le ratio entre le nombre de motifs (1) à (5) et le nombre de groupes acides des acides gras monomère, des dimères d'acides gras et/ou des trimères d'acides gras est compris entre 0,5 et 2.

Les polymères supramoléculaires préférés dans cette invention, résultant de la réaction de l'UDETA avec un mélange d'acides gras (contenant des dimères et trimères) sont généralement semi-cristallins avec des températures de fusion comprises entre 30°C et 150°C et des températures de transition vitreuse entre -50°C et 30°C.

Les compositions bitumineuses comprenant des polymères supramoléculaires non cristallins avec des propriétés élastiques comme ceux décrits dans WO 2006/0874575 rentrent aussi dans le cadre de la présente invention.

Un autre aspect de l'invention concerne les compositions bitumineuses comprenant :
- i°) au moins un liant bitumineux,
- ii°) au moins un tensioactif de formule (I) tel que défini précédemment
et/ou
une composition biodégradable telle que décrite ci-dessus, et
- iii°) une structure supramoléculaire formée par l'assemblage de polymères conventionnels à l'aide de liaisons physiques, les polymères conventionnels étant greffés avec au moins un groupe fonctionnel par polymère, groupe capable d'interagir par liaison hydrogène,
- iv°) et éventuellement un ou plusieurs composant A1, B1, C1, D1, E1, F1, G1, H1, I1, J1, K1 tels que définis ci-dessus.

Le polymère conventionnel peut être linéaire, branché ou réticulé chimiquement. On entend par polymères conventionnels ceux formés par des molécules comprenant deux ou plus de monomères, identiques ou non, liés par des liaisons covalentes, et ayant une masse molaire d'au moins 500 Daltons. Préférentiellement le groupe fonctionnel greffé sur de tels polymères est l'UDETA.

Alternativement, la composition peut comprendre un composé de formule (A) et/ou (B) et/ou (C) et/ou (D) et/ou un ou plusieurs bruts réactionnels décrits ci-dessus contenant une de ces compositions (A), (B), (C), (D) tels que décrits ci-dessus en lieu et place ou en addition du tensioactif de formule (I) et/ou de la composition biodégradable.

En outre, de l'eau peut être ajoutée, dans les proportions précédemment décrites aux fins d'obtenir des émulsions bitulmineuses, comprenant au moins une structure supramoléculaire telle que définie ci-dessus.

On ne sortirait pas du cadre de la présente invention par ajout, dans l'ensemble des compositions bitumineuses anhydres ou sous forme d'émulsion décrites dans la présente description, de tensioactifs anioniques, cationiques ou amphotères, comme par exemples ceux contenant des groupements fonctionnels chimiques amines, amidoamines, imidazolines, esters phosphoriques, acide gras et mélanges de ces produits.

Le dosage en polymère supramoléculaire dans les compositions bitumineuses de la présente invention est compris dans la fourchette 0,05% à 20% en masse par rapport au bitume.

De préférence, la teneur en additif utilisé de formule (I), (A), (B), (C), (D), A1, B1, C1, D1, E1, F1, G1, H1, I1, J1, K1 au sein des compositions bitumineuses va de 0,05 à 1% en poids, par rapport au poids du liant bitumineux.

Les composants, compositions ou les composants de ces compositions lorsqu'ils peuvent exister à l'état séparé selon l'invention peuvent-être introduits dans le liant chaud à tous niveaux ensemble ou de manières séparées sous forme solide, liquide, dispersée notamment avec de l'eau, en solution notamment avec de l'eau : dans la cuve à bitume, en injection en ligne dans le bitume, dans le malaxeur contenant les granulats, avant, pendant ou après l'ajout du bitume.

De plus, les produits bitumineux comprenant entre autres des granulats, comme par exemple les enrobés à froid, et fabriqués à partir du tensioactif ou des compositions selon l'invention présentent une excellente adhésivité entre le bitume et les granulats. Le tapis routier réalisé à partir d'un tel enrobé à froid présente une bonne résistance tout en étant capable de répondre aux sollicitations diverses dont il peut être l'objet en se déformant légèrement.

Les liants anhydres selon l'invention, comprenant comme dope d'adhésivité le tensioactif de formule (I), présentent des performances au moins égales et parfois supérieures aux meilleurs produits de référence en tant que dope d'adhésivité dans les applications routières. Les tensioactifs selon l'invention sont de type par exemple esters gras de choline et peuvent être obtenus par synthèse à partir de produits pétroliers mais aussi à partir de produits totalement renouvelables. Ces compositions sont de plus beaucoup moins sensibles à la nature des granulats que les produits aminés présents sur le marché qui demandent souvent une adaptation de formule à chaque changement de nature de granulats.

Les compositions bitumineuses décrites dans la présente invention peuvent être utilisées dans tous les procédés de fabrication d'enrobés, tels que ceux utilisant l'addition d'émulsions bitumineuses, l'addition de bitumes anhydres, ou l'un des nombreux procédés « tièdes » ou « semi-tièdes » (dans lesquels la température de fabrication est au-dessus de la température ambiante et en-dessous de la température de fabrication des enrobés à chaud), comme les techniques de moussage du bitume, décrites par exemple dans US 2008/00259714 qui utilise un équipement spécial de moussage, associé à un équipement multi-étape de chauffage/séchage/mélange, ou encore comme décrit dans US 5,910,212 et WO 97/20890, où sont utilisés un bitume dur combiné à un mélange de bitume mou et de granulats, ou encore comme dans US 2005/0076810, qui utilise un additif à haute capacité de désorption, ou encore comme décrit dans EP 1 469 038, dans lequel une partie des granulats est chauffée et séchée, et mélangée avec le bitume, puis mélangée avec des granulats mouillés, ou encore dans US 2006/00236614, où les granulats sont chauffés, séchés et mélangés avec le bitume, l'étape de séchage étant telle qu'une partie de l'humidité initiale des granulats reste, ou encore dans WO 07/112335 qui utilise une dispersion d'eau dans le bitume avec des tensioactifs spécifiques, ou encore US 6,588,974 qui utilise une paraffine Fischer-Tropsch ajoutée au bitume, en association, ou en remplacement partiel ou total du bitume.

L'invention va maintenant être illustrée à l'aide des exemples suivants.

### EXEMPLE 1 : Synthèse du mésylate de 9-octadécénoate de choline

Dans un réacteur en verre préalablement séché de 1000 cm³, muni d'une agitation mécanique efficace, d'un chauffage, d'un réfrigérant, d'une ampoule de coulée pour solide, d'un système d'inertage à l'azote, d'un système de dégagement/abattage d'HCl, on charge 60 g (0,625 mole) d'acide méthanesulfonique 99%. Le milieu réactionnel est agité à température ambiante. Puis on ajoute 69,75 g (0,5 mole) de chlorure de choline.

Au fur et à mesure de l'addition, on dégage de l'HCl qui est piégé et on obtient à la fin un liquide incolore. On débranche le piège à HCl et on installe une ampoule de coulée. On ajoute alors 214 g (0,756 mole) d'acide oléïque. Le milieu réactionnel est porté sous agitation à 120-140°C. Puis on met progressivement le montage sous vide de façon à distiller l'eau formée. Lorsqu'il ne sort plus d'eau entre 2H et 5 H, on se remet à pression atmosphérique, on refroidit et on vidange le réacteur à chaud.

Après analyse, on obtient un rendement en mésylate de 9-octadécénoate de choline de 88% par rapport au chlorure de choline.

Le produit obtenu peut être utilisé tel que pour les applications mentionnées dans cette invention.

### EXEMPLE 2 : Synthèse du mésylate de l'ester de choline d'acide dimère

Selon un mode opératoire similaire à celui de l'exemple 1, on charge 60 g (0,625 moles) d'acide méthanesulfonique à 99%. Le milieu réactionnel est agité à température ambiante. Puis on ajoute 69,75 g (0,5 moles) de chlorure de choline.

De manière similaire à l'exemple 1, après dégazage et piégeage de l'HCl et installation d'une ampoule de coulée, on ajoute 200 g (0,35 moles) d'acide dimère Pripol 1013 d'Uniqema. Le milieu réactionnel est porté sous agitation à 120-140°C. Après mise sous vide et lorsqu'il ne sort plus d'eau (après environ 2 heures à 5 heures), on se remet à pression atmosphérique, on refroidit et on vidange le réacteur à chaud.

Après analyse, on obtient un rendement en ester de 80% par rapport au chlorure de choline. Le produit est utilisé tel quel pour les applications visées dans la présente invention.

### EXEMPLE 3 : Synthèse de mésylate de l'ester de choline d'un acide dimère en C₂₁

De manière similaire au mode opératoire décrit à l'exemple 1, on charge 30 g (0,313 moles) d'acide méthanesulfonique à 99%. Le milieu réactionnel est agité à température ambiante. Puis on ajoute 34,9 g (0,25 moles) de chlorure de choline.

Après dégazage et piégeage de l'HCl et installation d'une ampoule de coulée, on ajoute 71,1 g (0,188 moles) d'acide dimère en C₂₁ (Admergin C21, Hobum). Le milieu réactionnel est porté sous agitation à 120-140°C. Après mise sous vide et lorsqu'il ne sort plus d'eau (après environ 2 heures à 5 heures), on se remet à pression atmosphérique, on refroidit et on vidange le réacteur à chaud.

Après analyse, on obtient un rendement en ester de 58% par rapport au chlorure de choline. Le produit obtenu est utilisé tel quel pour les applications visées dans la présente invention.

### EXEMPLE 4 : Synthèse du mésylate d'oléate de choline à partir d'anhydride mixte

De manière similaire au mode opératoire décrit à l'exemple 1, on charge 48 g (0,5 moles) d'acide méthanesulfonique à 99%. Le milieu réactionnel est agité à température ambiante. Puis on ajoute 69,75 g (0,5 moles) de chlorure de choline.

Après dégazage et piégeage de l'HCl et installation d'une ampoule de coulée, on ajoute alors 162,5 g (0,5 moles) d'anhydride mixte préparé au préalable à partir d'acide oléïque technique et de chlorure d'acétyle ou d'anhydride acétique. Le milieu réactionnel est porté sous agitation à 120-140°C. Puis on met progressivement le montage sous vide de façon à distiller l'acide acétique formé. Lorsque plus rien ne distille au bout d'environ 2 heures, on se remet à pression atmosphérique, on refroidit et on vidange le réacteur à chaud.

Après analyse, on obtient un rendement en ester de 90% par rapport au chlorure de choline. Le produit est utilisé tel quel pour les applications visées dans la présente invention.

### EXEMPLE 5 : Exemple d'application dans une émulsion bitumineuse

Le but est de réaliser ici des émulsions de bitume dites à « rupture rapide » pour les applications routières de répandage comme les enduits superficiels et les couches d'accrochage, et autres.

À partir d'un bitume paraffinique 160/220 Total Donges, on a fabriqué une émulsion à 65% de bitume avec 3.8 kg/t du produit obtenu à l'exemple 1 et ci-après appelé LPL856. Le pH de la phase aqueuse à été ajusté à 2 avant émulsification avec un peu d'acide chlorhydrique. L'appareil utilisé pour fabriquer l'émulsion est un groupe de laboratoire de marque Emulbitume équipé d'un moulin colloïdal de type Atomix C.

Les résultats des caractérisations des principales propriétés de cette émulsion sont donnés dans le tableau ci-dessous en comparaison des propriétés obtenues pour une émulsion de référence pour cette application tournée à l'Emulsamine L60^{®} (tensioactif commercialisé par la société CECA) (2 kg/t). Les résultats obtenus avec le tensioactif de l'exemple n°2 de FR 2 869 913 sont cités pour comparaison. On voit clairement ici que les résultats sont parfaitement en ligne avec ce qu'on attend d'une émulsion de répandage, à savoir un indice de rupture faible.

| **FORMULE*** | | 65/2/2 | 65/2/2 | 65/2/2 |
|---|---|---|---|---|
| PHASE LIANT | NATURE | Bitume 160/220 Total (06R090) | | |
| | Quantité (kg/T) | 650 | | |
| PHASE AQUEUSE | Émulsifiant | Emulsamine L60 | Tensioactif selon l'Exemple 1 (LPL 856) | Tensioactif selon Ex. 2 de FR 2 869 913 (LPL 796) |
| | Quantité kg/T | 2 | 3.8 | 4.1 |
| ACIDE HCl | Quantité kg/T | 1,28 | 1,3 | 0,6 |
| pH SAVON | | 2 | 2 | 2 |
| Conditions de FABRICATION | T°C BITUME | 140 | | |
| | T°C SAVON | 45 | | |
| | Débit Atomix | 70 L/h | | |
| RETENUE à 500 µm en o/oo | | 1 | 0 | 0 |
| pH DE L'EMULSION | | 4,1 | 2,7 | 2,3 |
| VISCOSITE BRTA 4mm (40°C) | | 7s | 8s | 9s |
| GRANULOMETRIE dia. médian (µm) | | 13 | 9 | 11 |
| INDICE DE RUPTURE | | 70 | 50 | 40 |
| Adhésivité eau bouillante | calcaire | 70% | 100% | 10% |
| | Silico-calcaire | 100% | 100% | 95% |

- Le résidu à 500 µm est mesuré selon la norme EN 1429 après 24 heures.
- L'indice de rupture est mesuré avec du filler Sikaïsol selon le mode opératoire décrit dans la norme EN13075-1.
- Le test d'adhésivité est réalisé selon un mode opératoire consistant à évaluer visuellement le pourcentage de surface encore recouverte par le bitume après un passage pendant 5 minutes dans de l'eau bouillante de granulats 6/10 enrobés à l'émulsion et séchés. Les granulats calcaires sont de la carrière Rascalat à Millau et les silico-calcaires sont de la carrière Bonnefond à Abjat.
- L'analyse granulométrique de l'émulsion est réalisée à l'aide d'un granulomètre laser Coulter LS230. Les coefficients pris pour les calculs sont (1,62, 0,005) pour le bitume et 1,332 pour l'eau. Les valeurs données dans le texte comme diamètre médian de l'émulsion correspondent à la médiane donnée par l'appareil, c'est-à-dire la dimension qui divise exactement la population des globules de bitume en deux moitiés égales.

### EXEMPLE 6 : Émulsification du bitume en fonction du dosage et de la composition utilisée

Les émulsions suivantes sont fabriquées à l'aide d'un groupe de laboratoire Emulbitume muni d'un moulin colloïdal Atomix C. On cherche à réaliser des émulsions de répandage de type C65B3 selon la norme EN 13808 : 2005. La teneur massique en bitume est de 65%. Le bitume utilisé est un bitume paraffinique de pénétrabilité 160/220 fourni par la société Total et provenant de la raffinerie de Donges. La phase aqueuse est préparée en mélangeant la quantité de tensioactif nécessaire pour obtenir le dosage visé dans l'émulsion et l'eau à 45°C. Le pH de la phase aqueuse est ensuite ajusté à 2 avec de l'acide chlorhydrique. La température du bitume lors de l'émulsification est de 140°C.

Les tensioactifs utilisés dans ces essais sont des bruts réactionnels issus de la réaction d'acide oléique avec du chlorure de choline selon le procédé décrit à l'exemple 1 de la présente demande. Les compositions massiques déterminées par analyse sont les suivantes :

| | Lot 1 | Lot 2 |
|---|---|---|
| Mésylate de 9-octadécénoate de choline | 56% | 66.5% |
| Acide oléique | 31.5% | 26.1% |
| Acide méthane sulfonique (AMS) | 6.8% | 5.2% |
| Mésylate de choline | 5.6% | 2.3% |

Les résultats de caractérisation des principales propriétés de ces émulsions sont données dans le tableau ci-dessous avec des exemples de préconisations adaptées du livre « Les émulsions de bitume » édité par la revue générale des routes et aérodromes (RGRA) pour le compte de l'union des Syndicats des Industries routières françaises (USIRF), routes de France, section SFERB :

| Tensioactif | Préconisations | Lot 1 | Lot 2 | Lot 2 | Lot 2 |
|---|---|---|---|---|---|
| Dosage dans l'émulsion kg/t | / | 4,4 | 3,7 | 3 | 2 |
| Teneur massique en liant (%) | 63-67 | 64,8 | 65,3 | 65,1 | 64,9 |
| Résidu à 0,5 mm (%) | < 0,1 | 0,02 | 0,005 | 0,03 | 0,007 |
| Pseudoviscosité STV 4 mm (25°C) | 12 - 65s | 14 s | 15 s | 16 s | 14 s |
| IREC (indice de rupture) | 35 - 70 | 45 | 50 | 60 | 55 |
| Stockabilité (7j) résidu tamis 0,5 mm (%) | < 0,2 | < 0,01 | < 0,01 | < 0,01 | < 0,01 |
| Adhésivité eau bouillante (%) granulats calcaire | ≥ 75 | 90 | 100 | 100 | 75 |
| Adhésivité eau bouillante (%) granulats granite | ≥ 75 | 100 | 100 | 100 | 100 |

La teneur massique en liant est mesurée à l'aide d'une balance halogène Mettler. Le résidu à 0.5 mm est mesuré selon la norme EN 1429 après 24 heures et à 7 jours.

L'IREC est mesuré avec du filler Sikaïsol selon le mode opératoire décrit dans la norme EN13075-1.

Le test d'adhésivité est réalisé selon un mode opératoire consistant à évaluer visuellement selon les même critères que la norme EN 13614 le pourcentage de surface encore recouverte par le bitume après un passage pendant 5 minutes dans de l'eau bouillante de granulats 6/10 enrobés à l'émulsion et séchés. Les granulats calcaires sont de la carrière Rascalat à Millau et les granites sont de la carrière Bonnefond à Abjat.

### EXEMPLE 7 : Essai comparatif d'émulsification pour émulsion de répandage

Cet essai comparatif d'émulsification pour émulsion de répandage est effectué avec un tensioactif largement répandu pour ce type d'application, l'Emulsamine L60 commercialisée par la société CECA, par rapport au tensioactif selon l'invention « Lot 2 » de l'exemple 3.

Les émulsions suivantes sont fabriquées à l'aide d'un groupe de laboratoire Emulbitume muni d'un moulin colloïdal Atomix C. On a cherché à réaliser des émulsions de répandage de type C65B2 selon la norme EN 13808 : 2005. La teneur massique en bitume est de 65%. Le bitume utilisé est un bitume paraffinique de pénétrabilité 160/220 fourni par la société Total et provenant de la raffinerie de Donges. La phase aqueuse est préparée en mélangeant la quantité de tensioactif nécessaire pour obtenir le dosage visé dans l'émulsion et l'eau à 45°C. Le pH de la phase aqueuse est ensuite ajusté à 2 avec de l'acide chlorhydrique. La température du bitume lors de l'émulsification est de 140°C.

Les résultats de caractérisation des principales propriétés de ces émulsions sont données dans le tableau ci-dessous avec des exemples de préconisations adaptées du livre « Les émulsions de bitume » édité par la revue générale des routes et aérodromes (RGRA) pour le compte de l'union des Syndicats des Industries routières françaises (USIRF), routes de France, section SFERB :

| Tensioactif | Préconisations | Emulsamine L60 | Lot 2 |
|---|---|---|---|
| Dosage dans l'émulsion kg/t | / | 2 | 2 |
| Teneur massique en liant (%) | 63-67 | 65,1 | 64,9 |
| Résidu à 0,5 mm (%) | < 0,1 | 0,08 | 0,007 |
| Pseudoviscosité STV 4 mm (25°C) | 12-65s | 13s | 14s |
| IREC | < 80 | 70 | 55 |
| Stockabilité (7j) résidu tamis 0.5 mm (%) | < 0,2 | < 0,01 | < 0,01 |
| Adhésivité eau bouillante (%) granulats calcaire | ≥ 75 | 75 | 75 |
| Adhésivité eau bouillante (%) granulats granite | ≥ 75 | 100 | 100 |

La teneur massique en liant est mesurée à l'aide d'une balance halogène Mettler. Le résidu à 0.5 mm est mesuré selon la norme EN 1429 après 24 heures et à 7 jours.

L'IREC est mesuré avec du filler Sikaïsol selon le mode opératoire décrit dans la norme EN13075-1.

Le test d'adhésivité est réalisé selon un mode opératoire consistant à évaluer visuellement selon les même critères que la norme EN 13614 le pourcentage de surface encore recouverte par le bitume après un passage pendant 5 minutes dans de l'eau bouillante de granulats 6/10 enrobés à l'émulsion et séchés. Les granulats calcaires sont de la carrière Rascalat à Millau et les granites sont de la carrière Bonnefond à Abjat.

### EXEMPLE 8 : Fabrication d'une émulsion d'enrobage pour application en Grave émulsion

L'émulsion suivante est fabriquée à l'aide d'un groupe de laboratoire Emulbitume muni d'un moulin colloïdal Atomix C. La teneur massique en bitume est de 62%. Le bitume utilisé est identique à celui de l'exemple 7. La phase aqueuse est préparée en mélangeant la quantité de tensioactif selon l'invention de type « Lot 2 » nécessaire pour obtenir un dosage final dans l'émulsion de 15 kg/t et l'eau à 45°C. Le pH de la phase aqueuse est ensuite ajusté à 2 avec de l'acide chlorhydrique. La température du bitume lors de l'émulsification est de 145°C.

Le granulat est un silico-calcaire éruptif de la carrière « Carceller » à La Rouquié et la répartition des fractions est la suivante :
- 0/2 : 40%
- 2/6 : 15%
- 6/10 : 45%

L'enrobage est réalisé avec 5 ppc d'eau et 6,8 ppc d'émulsion, à la main avec une spatule métallique dans une gamelle sur 1 kg de granulats environ. L'enrobage après 20 secondes de malaxage est total. L'enrobé présente une bonne maniabilité.

### EXEMPLE 9: Fabrication d'une émulsion d'enrobage avec co-tensioactif non ionique pour application en grave émulsion calcaire

En application grave émulsion, le taux d'émulsion pour l'enrobage étant relativement faible, l'enrobage des granulats calcaire est considéré comme particulièrement délicat. On a souvent recours à des tensioactifs non ioniques dont la rupture est mal contrôlée et qui conduisent à des eaux de rupture sales ou des pollutions des bas-côtés si une pluie survient après le chantier. La résistance mécanique à l'eau de l'enrobée est souvent critique.

Les émulsions suivantes sont fabriquées à l'aide d'un groupe de laboratoire Emulbitume muni d'un moulin colloïdal Atomix C. La teneur massique en bitume est de 60%. Le bitume utilisé est identique à celui de l'exemple 7. La phase aqueuse est préparée en mélangeant la quantité d'émulsifiant de tensioactif nécessaire pour obtenir le dosage visé dans l'émulsion et l'eau à 45°C. Le pH de la phase aqueuse est ensuite ajusté à 2 avec de l'acide chlorhydrique. La température du bitume lors de l'émulsification est de 140°C.

Composition des formules émulsifiantes utilisées pour fabriquer les émulsions :
A/ Stabiram 3070® (tensioactif commercialisé par la société CECA) ;
B/ Stabiram 3070® / tensioactif selon l'invention de type « Lot 2 » (ratio massique 70/30) ;

Composition granulaire de l'enrobé 0/10 sur granulats calcaires « Batireg » de Villeseque :
- 0/6 : 60%
- 6/10 : 40%

| ***Tensioactif*** | ***A*** | ***B*** |
|---|---|---|
| Dosage dans l'émulsion (kg/t) | 14 | 14 |
| Qualité d'enrobage (%) | 90 | 100 |
| Résistance au désenrobage (%) | 80 | 90 |
| Qualité de l'eau de rupture | sale | propre |
| Résistance à l'eau | faible | moyenne |

La qualité d'enrobage est évaluée sur un échantillon d'environ 1 kg d'enrobé fabriqué en gamelle suivant les proportions : 1 part de granulats reconstitués secs + 8 ppc (part pour cent) d'eau + 7 ppc d'émulsion. On évalue alors le pourcentage de surface de granulat couverte par le bitume après 20 secondes de malaxage.

La résistance au désenrobage est évaluée par trituration à la main pendant environ une minute dans la gamelle de l'enrobé après stockage pendant 2 heures. On évalue alors le pourcentage de surface de granulat encore couverte par le bitume après cette trituration.

La qualité de l'eau est jugée visuellement sur l'eau qui est évacuée de l'enrobé lors du compactage à la presse à cisaillement giratoire après 2 heures de stockage.

La résistance à l'eau est jugée par un test propre à notre laboratoire et qui consiste à comparer la résistance mécanique d'éprouvettes d'enrobés après stockage un certain temps à l'air ou immergées dans l'eau.

### EXEMPLE 10 : Fabrication d'une émulsion d'enrobage pour enrobé stockable

L'émulsion suivante est fabriquée à l'aide d'un groupe de laboratoire Emulbitume muni d'un moulin colloïdal Atomix C. La teneur massique en bitume fluxé est de 65%. Le bitume utilisé est un bitume paraffinique de pénétrabilité 70/100 fourni par la société Total et provenant de la raffinerie de Donges, dans lequel on ajoute 10% d'un fluxant de type kerdane. La phase aqueuse est préparée en mélangeant la quantité de tensioactif selon l'invention de type « Lot 2 » nécessaire pour obtenir un dosage final dans l'émulsion de 6 kg/t et l'eau à 45°C. Le pH de la phase aqueuse est ensuite ajusté à 2 avec de l'acide chlorhydrique. La température du bitume lors de l'émulsification est de 115°C.

Le granulat est un granit russe et la répartition des fractions est la suivante :
- 0/5 : 10%
- 5/10 : 90%

L'enrobage est réalisé avec 2 ppc d'eau et 8,5 ppc d'émulsion, à la main avec une spatule métallique dans une gamelle sur 1 kg de granulats environ. L'enrobage après 20 secondes de malaxage est total. L'enrobé est brillant avec une bonne maniabilité. La stockabilité est bonne sur plusieurs semaines.

### EXEMPLE 11 : Fabrication d'une émulsion d'enrobage pour Béton Bitumineux à Froid

L'émulsion suivante est fabriquée à l'aide d'un groupe de laboratoire Emulbitume muni d'un moulin colloïdal Atomix C. La teneur massique en bitume est de 62%. Le bitume utilisé est un bitume paraffinique de pénétrabilité 160/220 fourni par la société Total et provenant de la raffinerie de Donges. La phase aqueuse est préparée en mélangeant la quantité de tensioactif selon l'invention de type « Lot 2 » nécessaire pour obtenir un dosage final dans l'émulsion de 15 kg/t et l'eau à 45°C. Le pH de la phase aqueuse est ensuite ajusté à 2 avec de l'acide chlorhydrique. La température du bitume lors de l'émulsification est de 145°C.

Le granulat est un silico-calcaire alluvionnaire de la carrière des sablières de Garonne à Grenade Saint-Jory et la répartition des fractions est la suivante :
- 0/2 : 40%
- 2/6 : 20%
- 6/10 : 40%

L'enrobage est réalisé avec 5 ppc d'eau et 9,2 ppc d'émulsion, à la main avec une spatule métallique dans une gamelle sur 1 kg de granulats environ. L'enrobage après 20 secondes de malaxage est total. L'enrobé présente une bonne maniabilité et une cohésion au jeune âge correcte après compactage.

### EXEMPLE 12: Mesure de l'adhésivité d'un liant dopé avec des produits selon l'invention

Le test pratiqué ici est un test inspiré de la norme XP T66-043.

Les différences avec la norme se situent au niveau de la quantité de bitume utilisée par rapport aux granulats (6 g pour 100 g de granulats) et du traitement après enrobage qui consiste à soumettre les granulats immergés à une ébullition durant 5 minutes contre 16 heures à 65°C dans la norme.

L'évaluation du pourcentage de surface encore recouverte d'un film de liant est réalisée selon les critères de la norme. Le test est considéré positif pour un résultat ≥ à 75%.

Le bitume utilisé ici est un bitume paraffinique de pénétrabilité 70/100 fourni par la société Repsol.

Les granulats 6/10 utilisés sont de 3 types différents :
- Un grès quartzite des carrières de Vignat ;
- Un Granite de la carrière Bonnefond à Abjat ;
- Un calcaire de la carrière Sévigné à Rascalat ;

Les dopes selon l'invention testés ici sont des bruts réactionnels issus de la réaction d'acide oléique avec du chlorure de choline selon le procédé décrit dans l'Exemple 1 de la présente demande. Les compositions massiques déterminées par analyse sont les suivantes :

| | dope 1 | dope 2 |
|---|---|---|
| Mésylate de 9-octadécénoate de choline | 56% | 66.5% |
| Acide oléique | 31.5% | 26.1% |
| Acide méthane sulfonique (AMS) | 6.8% | 5.2% |
| Mésylate de choline | 5.6% | 2.3% |

Ils sont comparés à un dope aminé commercial d'usage courant, le Cecabase^{®} 260 commercialisée par la Société CECA :

| Dope | Dosage (kg/t) | Résultat du test d'adhésivité (%) | | |
|---|---|---|---|---|
| | | quartzite | granite | calcaire |
| | | 0 | 50 | 75 |
| Cecabase 260 | 2.5 | 90 | 90 | 90 |
| Cecabase 260 | 1.5 | 75 | 90 | 90 |
| Dope 1 | 2.5 | 90 | 90 | 90 |
| Dope 2 | 2.5 | 100 | 100 | 90 |
| Dope 2 | 1.5 | 90 | 90 | 90 |

### EXEMPLE 13 : Mesure de l'adhésivité active d'un liant dopé suivant l'invention selon la norme NF T 66-061.

Le bitume utilisé ici est un bitume paraffinique de pénétrabilité 70/100 fourni par la société Repsol. Les dopes selon l'invention sont utilisés à 2,5 kg/t de liant.

| Dope | Résultat test |
|---|---|
| - | négatif |
| Dope 1 | positif |
| Dope 2 | positif |

### EXEMPLE 14 : Exemple d'application en dope d'adhésivité bitume

Le test pratiqué ici est un test inspiré de la norme XP T66-043 mais qui vise à être beaucoup plus sévère.

Les différences avec la norme se situent au niveau de la quantité de bitume utilisée par rapport aux granulats (6 g pour 100 g de granulats) et surtout du traitement après enrobage qui consiste à soumettre les granulats immergés à une ébullition durant 5 minutes dans une eau salée à 150 g/L de NaCl contre 16 heures à 65°C dans de l'eau pure selon la norme.

L'évaluation du pourcentage de surface encore recouverte d'un film de liant est réalisée selon des critères visuels.

On utilise ici 2 types de granulats 6/10 différents :
- Un silico-calcaire de la carrière Poplar-lane à Tauranga (NZ) ;
- Un calcaire de la carrière Sévigné à Rascalat (FR).

Le bitume utilisé est un bitume paraffinique Repsol de pénétrabilité 70/100. Le dope d'adhésivité, composé obtenu à l'Exemple 1 est utilisé à raison de 2,3 kg/t de bitume.

Après test, le résultat sur les deux types de granulat est de 100% pour une valeur considérée acceptable à partir de 75% de taux de couverture des granulats par le bitume (observation visuelle).

Ce résultat est très bon si l'on considère que dans les mêmes conditions et à un dosage légèrement supérieur (2,4 kg/t), le tensioactif de l'exemple n°2 de FR 2 869 913 donne 50% sur le granulat silico-calacaire et 10% sur le calcaire. Sans dope, les valeurs sont de 5% pour chacun des granulats.

### Exemple 15 : Émulsification de bitume avec un tensioactif de type diester de choline

Une émulsion de répandage de type C65B3 selon la norme EN 13808 (2005) est fabriquée à l'aide d'un appareil de laboratoire Emulbitume muni d'un moulin colloïdal Atomix C. La teneur massique en bitume est de 65%. Le bitume utilisé est un bitume paraffinique de pénétrabilité 160/220 fourni par la société Total et provenant de la raffinerie de Donges. La phase aqueuse est préparée en mélangeant la quantité d'émulsifiant nécessaire pour obtenir le dosage visé dans l'émulsion et l'eau à 45°C. Le pH de la phase aqueuse est ensuite ajusté à 2 avec de l'acide chlorhydrique. La température du bitume lors de l'émulsification est de 140°C.

L'émulsifiant utilisé dans cet essai est le brut réactionnel obtenu à l'Exemple 3 (Lot 3). La composition massique déterminée par analyse est la suivante :

| | Lot 3 |
|---|---|
| (Di)ester de choline | 70.4% |
| (Di)acide gras résiduel | 9.7% |
| Acide méthane sulfonique (AMS) | 6.8% |
| Mésylate de choline | 13.1% |

Les résultats de caractérisation des principales propriétés de cette émulsion (Émulsion 1) sont donnés dans le tableau ci-dessous avec des exemples de préconisations adaptées du livre intitulé « Les émulsions de bitume » édité par la revue générale des routes et aérodromes (RGRA) pour le compte de l'union des Syndicats des Industries routières françaises (USIRF), routes de France, section SFERB :

| | Préconisations | Émulsion 1 |
|---|---|---|
| Dosage d'émulsifiant dans l'émulsion kg/t | / | 2,5 |
| Teneur massique en liant (%) | 63-67 | 64,1 |
| pH | / | 2,4 |
| Résidu à 0,5 mm (%) | < 0,1 | < 0,1 |
| Pseudoviscosité STV 4 mm (25°C) | 12 - 65 s | 14 |
| IREC | < 80 | 70 |
| Stockabilité (7 j) résidu tamis 0,5 mm (%) | < 0,2 | < 0,1 |
| Adhésivité eau bouillante (%) granulats calcaire | >ou = 75 | 75 |
| Adhésivité eau bouillante (%) granulats diorite | >ou = 75 | 100 |
| Adhésivité eau bouillante (%) granulats quartzite | >ou = 75 | 100 |

La teneur massique en liant est mesurée à l'aide d'une balance halogène mettler selon un mode opératoire propre au laboratoire. Le résidu à 0,5 mm est mesuré selon la norme EN 1429 après 24 heures et à 7 jours. L'IREC est mesuré avec du filler Sikaïsol selon le mode opératoire décrit dans la norme EN13075-1.

Le test d'adhésivité est réalisé selon un mode opératoire propre au laboratoire et consiste à évaluer visuellement selon les même critères que la norme EN 13614 le pourcentage de surface encore recouverte par le bitume après un passage pendant 5 minutes dans de l'eau bouillante de granulats 6/10 enrobés à l'émulsion et séchés.

Les granulats 6/10 utilisés sont les mêmes que ceux utilisés à l'Exemple 12.

### Exemple 16 : Fabrication d'une émulsion d'enrobage pour Béton Bitumineux à Froid

L'émulsion suivante est fabriquée à l'aide d'un appareil de laboratoire Emulbitume muni d'un moulin colloïdal Atomix C. La teneur massique en bitume est de 63%. Le bitume utilisé est identique à celui de l'exemple 7. La phase aqueuse est préparée en mélangeant la quantité d'émulsifiant « Lot 3 » nécessaire pour obtenir un dosage final dans l'émulsion de 10 kg/t et l'eau à 45°C. Le pH de la phase aqueuse est ensuite ajusté à 2 avec de l'acide chlorhydrique. La température du bitume lors de l'émulsification est de 145°C.

Le granulat est un grès quartzite des carrières de Vignat et la répartition des fractions granulaires avant enrobage est la suivante :
- 0/2 : 50%
- 2/6 : 20%
- 6/10 : 30%

L'enrobage est réalisé avec 5 ppc d'eau et 9 ppc d'émulsion (calculé sur la masse de granulats secs), à la main avec une spatule métallique dans une gamelle sur 1 kg de granulats environ. L'enrobage après 20 secondes de malaxage est total. L'enrobé présente une bonne maniabilité et une cohésion au jeune âge correcte après compactage.

### Exemple 17 : Fabrication d'une émulsion d'enrobage pour Enrobé coulé à froid

L'émulsion suivante est fabriquée à l'aide d'un appareil de laboratoire Emulbitume muni d'un moulin colloïdal Atomix C. La teneur massique en bitume est de 62%. Le bitume utilisé est un bitume naphténique de pénétrabilité 70/100 fourni par la société Nynas. La phase aqueuse est préparée en mélangeant la quantité d'émulsifiant « Lot 3 » nécessaire pour obtenir un dosage final dans l'émulsion de 10 kg/t et l'eau à 45°C. Le pH de la phase aqueuse est ensuite ajusté à 2 avec de l'acide chlorhydrique. La température du bitume lors de l'émulsification est de 145°C.

Le granulat est un grès quartzite des carrières de Vignat suivant un fuseau granulaire de type ISSA III en 0/10 mm dans lequel on rajoute 0,5 ppc de ciment Portland de type CEM II B/LL.

L'enrobage est réalisé avec 10 ppc d'eau et 12 ppc d'émulsion (calculé sur la masse de granulats secs), à la main avec une spatule métallique dans une gamelle sur 500 g de granulats environ. Le temps de malaxage observé est de 100 secondes et l'ouverture au traffic selon les critères du test Bénédict est possible au bout d'une heure de mûrissement.

### Exemple 18 : Réalisation d'un enrobé à température réduite

Nous avons fabriqué sur une centrale fixe possédant un tambour sécheur-malaxeur, un Béton Bitumineux Semi-Grenu (BBSG) 0/10 de classe 3 en trois planches différentes, toutes trois possédant la formule granulaire suivante :
- filler calcaire 4%
- sable 0/2 rhyolite 35%
- granulats 2/6 rhyolite 13%
- granulats 6/10 rhyolite 48%

Le bitume utilisé est un TOTAL Azalt 35/50, de caractéristiques suivantes : pénétrabilité à 25°C égale à 43, de point de ramollissement bille-anneau 50°C. La teneur en produit bitumineux est de 6 g pour 100 g de granulats. Pour les deux premières planches, le bitume a été utilisé pur. Pour la troisième planche, le bitume a été additivé avec l'additif de l'exemple 1 au dosage de 5 kg par tonne de bitume.

L'additivation a été effectuée par le trou d'homme de la cuve de stockage du bitume dédiée. Le bitume ainsi additivé a été utilisé après 1 heure de recirculation dans la cuve de stockage.

Lors de la production de l'enrobé, les températures suivantes ont été respectées :
- le granulat a été chauffé à 160 °C pour la première planche et 120 °C pour les trois planches suivantes
- le bitume a dans tous les cas était utilisé à 165°C.

L'épandage a été effectué à l'aide d'un finisseur Marini MF905, dont la vitesse d'avancement était de 5 m/min et d'un compacteur Dynapac CC422, dont la vitesse d'avancement était de 3 km/h, avec une épaisseur de tapis visée en fin de compactage de 5 cm. Le nombre de passes réalisées a été de 11, sous vibrations d'amplitude 0,8 mm et de fréquence 51 Hz. Lors du compactage, les températures du BBSG suivantes ont été respectées :
- sur bitume pur, à 140°C en moyenne pour la première planche et 95°C pour la seconde planche ;
- sur bitume additivé à 95°C pour la troisième planche.

Ont été mesurées, suite au chantier, la masse volumique apparente au gammadensimètre selon la norme NF P 98-241-1, la masse volumique apparente par pesée hydrostatique selon la norme NF P 98-250. Les porosités sont calculées à partir des masses volumiques gamma corrigées par les mesures en pesée hydrostatique. Les températures du BBSG ont été mesurées à coeur.

| Nature du bitume | T granulats à la production (°C) | T BBSG à la dépose (°C) | T BBSG au compactage (°C) | Porosité moyenne (%) |
|---|---|---|---|---|
| Bitume pur | 160 | 160 | 140 | 4,4 |
| Bitume pur | 120 | 120 | 95 | 8,3 |
| Bitume + additif exemple 1 | 120 | 120 | 95 | 6,8 |

Par rapport aux limites de porosité pour les BBSG 0/10 de classe 3 qui sont de 4 et 8%, le BBSG de référence est correct. Dans les mêmes conditions de compactage, le BBSG produit en conditions thermiques de production dégradées sans additif a une porosité moyenne qui est supérieure à la limite haute. L'écart de porosité moyenne par rapport au BBSG de référence est fortement réduit lorsque, malgré les conditions thermiques de production dégradées, on utilise l'additif de l'exemple 1 dans le bitume.

## Revendications

1. Composition **bitumineuse** comprenant :
- au moins un liant bitumineux, et
- au moins une composition comprenant :
i) de 50% à 100% en poids, par rapport au poids **total de ladite** composition, d'un tensioactif de formule (I) suivante :
R-CO-O-(CH₂)₂-N+(R¹R²R³)X1⁻ (I)
dans laquelle :
R est une chaîne hydrocarbonée en C₄-C₃₂, de préférence en C₇-C₂₁, saturée ou
insaturée, linéaire ou ramifiée, éventuellement hydroxylée,
R¹, R² et R³ représentent chacun, indépendamment l'un de l'autre, un radical alkyle en C₁-C₄,
X1 est un radical halogène ou mésyle,
ii) de 0 à 15%, en poids, par rapport au poids **total de ladite** composition, de HX1,
iii) de 0 à 40% en poids, par rapport au poids **total de ladite** composition, d'un acide gras de formule (III) R-CO-OH, et
iv°) de 0 à 40% en poids, par rapport au poids **total de ladite** composition, de composé de formule (IV) HO-(CH₂)₂-W(R₁R₂R₃)X1⁻ ;
composition dans laquelle i) + ii) + iii) + iv) représente 100% en poids du poids **total de ladite** composition.

2. Composition **bitumineuse** selon la revendication 1, dans laquelle X1 est le radical mésyle et R¹, R² et R³ sont identiques et représentent chacun le radical méthyle.

3. Composition **bitumineuse** selon la revendication 1 ou 2, **caractérisée en ce que** R est une chaîne issue d'acides gras présents dans les huiles végétales naturelles, de préférence choisies parmi l'huile de colza, l'huile de tournesol, l'huile de soja, l'huile de lin, l'huile de copra, l'huile de palme, l'huile de ricin, et leurs mélanges.

4. Composition **bitumineuse** selon l'une quelconque des revendications précédentes, **caractérisée en ce que** R est issu d'un acide gras choisi parmi l'acide oléique, l'acide laurique, l'acide palmitique, l'acide ricinoléique, l'acide linoléique et leurs mélanges, de préférence R est issu de l'acide oléique ;

5. Composition **bitumineuse** selon l'une quelconque des revendications précédentes, **caractérisée en ce que** R représente un radical CₙH₂ₙ₊ₓ dans laquelle 7 < n < 21 et x est -2, 0 ou 2.

6. Composition bitumineuse selon **l'une quelconque des revendications précédentes**, sous forme d'émulsion, comprenant en outre de l'eau, de préférence en quantité comprise entre 20% et 60% en poids d'eau par rapport à la composition sous forme anhydre.

7. Composition **bitumineuse** selon **l'une quelconque des revendications précédentes**, comprenant en outre au moins un cotensioactif choisi parmi les tensioactifs anioniques, les tensioactifs cationiques, les tensioactifs non ioniques et leurs mélanges.

8. Composition **bitumineuse** selon **l'une quelconque des revendications précédentes**, comprenant en outre au moins un additif choisi parmi :
➢ A1 : le produit dont la formule chimique est R -O-(( CH₂CH(CH₃)O)ₐ-(CH₂CH₂O)_{b})_{c}P(=O)-OH_{d} avec P l'atome de phosphore, c compris entre 1 et 2, c+d égal à 3, a compris entre 0 et 3, b compris entre 0 et 6 et R représentant une chaîne hydrocarbonée possédant 6 à 30 atomes de carbone,
➢ B1 : le produit de la réaction de (di)alk(én)ylphénols sur aldéhydes, les aldéhydes comportant de 1 à 10 atomes de carbone et plus particulièrement de 1 à 5 atomes de carbone, et plus particulièrement le paraformaldéhyde ou l'acétaldéhyde, suivie d'une (poly)oxyéthylation et/ou (poly)oxypropylation, les groupements alk(én)yl ayant entre 1 et 50 atomes de carbone, et de préférence entre 2 et 20 atomes de carbone, et plus particulièrement de 3 à 12 atomes de carbone, et pouvant être identiques ou différents dans le cas de dialk(én)ylphénols, la partie construite par (poly)oxyéthylation et/ou (poly)oxypropylation ayant une masse molaire supérieure ou égale à 45 g/mol et inférieure à 20 000 g/mol, le nombre de motifs phénoliques du produit B1 variant entre 3 et 50,
➢ C1: copolymère 2,2-bis(4-hydroxyphenyl)propane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 g/mol,
➢ D1 : copolymère bis(4-hydroxyphenyl)éthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 g/mol,
➢ E1 : copolymère bis(4-hydroxyphenyl)méthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000 /mol,
➢ F1 : le produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone et préférentiellement entre 1 et 10, l'ensemble des parties construites par (poly)oxyéthylation et/ou (poly)oxypropylation ayant une masse molaire supérieure à 100 g/mol et inférieure à 20 000 g/mol,
➢ G1 : le produit de la (poly)oxyéthylation et/ou (poly)oxypropylation d'un acide gras dont le nombre d'atomes de carbone est compris entre 10 et 30, et plus particulièrement sur l'acide gras de tall oil, la partie construite par (poly)oxyéthylation et/ou (poly)oxypropylation ayant une masse molaire supérieure à 100 g/mol et inférieure à 20 000 g/mol,
➢ H1 : le produit de la réaction entre le produit B1 et le mélange des produits F1 et G1,
➢ I1: sel d'acide alk(én)yl(aryl) sulfonique et d'alk(én)yl(aryl)amine, les motifs alk(én)yl(aryl) comportant un nombre d'atome de carbone compris entre 6 et 30, et plus particulièrement le sel d'acide dodécylbenzènesulfonique et d'amine de suif, ainsi que le sel d'acide dodécylbenzènesulfonique et de cyclohéxylamine,
➢ J1 : sel d'acide alk(én)yl(aryl) sulfonique et de morpholine ou pyrazine ou pyrazoline ou pyrazolone ou pyridine ou pyridone ou pyrimidine ou pyrrole ou pyrrolidine ou pyyrolidone ou pyrroline ou toluidine ou imidazole ou indol ou indoline ou oxindole, les motifs alk(én)yl(aryl) comportant un nombre d'atome de carbone compris entre 6 et 30, et plus particulièrement le sel d'acide dodécylbenzènesulfonique et de morpholine,
➢ K1 : copolymère(s) oxyde d'éthylène - oxyde de propylène, statistique ou à blocs, de masse molaire comprise entre 500 g/mol et 20 000 g/mol, de ratio massique (oxyde d'éthylène sur copolymère) compris entre 1% et 70%, seul ou en mélange avec d'autres membres de cette classe.

9. Composition **bitumineuse** selon **l'une quelconque des revendications précédentes**, comprenant en outre au moins un composant capable de former un réseau supramoléculaire.

10. Composition **bitumineuse** selon la revendication **9**, dans laquelle le composant capable de former un réseau supramoléculaire est le polymère supramoléculaire issu de la réaction entre la 2-aminoéthylimidazolidin-2-one (UDETA) et/ou 3-amino-1,2,4-triazole et un mélange contenant :
• 51 à 100% en poids d'un ou plusieurs dimère d'acide gras identiques ou différents et/ou d'un ou plusieurs trimères d'acide gras identiques ou différents ; et
• 0 à 49% en poids d'un ou plusieurs monomères d'acides gras identiques ou différents et/ou d'un ou plusieurs oligomères supérieurs d'acide gras identiques ou différents.

11. Composition bitumineuse selon la revendication **9**, dans laquelle le composant capable de former un réseau supramoléculaire est une structure supramoléculaire formée par l'assemblage de polymères conventionnels à l'aide de liaisons physiques, les polymères conventionnels étant greffés avec au moins un groupe fonctionnel par polymère, groupe capable d'interagir par liaison hydrogène.

12. Utilisation d'une composition bitumineuse selon l'une quelconque des revendications **1 à 11**, pour la fabrication de produits bitumineux pour applications routières ou enduits d'étanchéité, tels que par exemple enduits ou couches d'accrochage, enrobés stockables ouverts, grave émulsions, ou encore enrobés denses à froid.

13. Produit bitumineux comprenant au moins composition bitumineuse selon l'une quelconque des revendications **1 à 11**.

## Patentansprüche

1. Bituminöse Zusammensetzung, umfassend:
- mindestens ein bituminöses Bindemittel und
- mindestens eine Zusammensetzung, umfassend:
i) 50 bis 100 Gew.-%, bezogen auf das Gesamtgewicht der Zusammensetzung, eines Tensids der folgenden Formel (I) :
R-CO-O-(CH₂)₂-N⁺(R¹R²R³)X1⁻ (I)
worin:
R für eine gegebenenfalls hydroxylierte, lineare oder verzweigte, gesättigte oder ungesättigte C₄-C₃₂- und vorzugsweise C₇-C₂₁-Kohlenwasserstoffkette steht,
R¹, R² und R³ jeweils unabhängig voneinander für einen C₁-C₄-Alkylrest stehen,
X1 für einen Halogen- oder Mesylrest steht,
ii) 0 bis 15 Gew.-%, bezogen auf das Gesamtgewicht der Zusammensetzung, HX1,
iii) 0 bis 40 Gew.-%, bezogen auf das Gesamtgewicht der Zusammensetzung, einer Fettsäure der Formel (III) R-CO-OH und
iv) 0 bis 40 Gew.-%, bezogen auf das Gesamtgewicht der Zusammensetzung, Verbindung der Formel (IV) HO- (CH₂)₂-N⁺(R¹R²R³)X1⁻;
wobei in der Zusammensetzung i) + ii) + iii) + iv) 100 Gew.-% des Gesamtgewichts der Zusammensetzung ausmachen.

2. Bituminöse Zusammensetzung nach Anspruch 1, wobei X1 für den Mesylrest steht und R¹, R² und R³ gleich sind und jeweils für den Methylrest stehen.

3. Bituminöse Zusammensetzung nach Anspruch 1 oder 2, **dadurch gekennzeichnet, dass** R für eine Kette steht, die sich von Fettsäuren, die in natürlichen pflanzlichen Ölen vorliegen und vorzugsweise aus Rapsöl, Sonnenblumenöl, Sojaöl, Leinöl, Kokosnussöl, Palmöl, Ricinusöl und Mischungen davon ausgewählt sind, ableitet.

4. Bituminöse Zusammensetzung nach einem der vorhergehenden Ansprüche, **dadurch gekennzeichnet, dass** R sich von einer Fettsäure, die aus Ölsäure, Laurinsäure, Palmitinsäure, Ricinolsäure, Linolsäure und Mischungen davon ausgewählt ist, ableitet und R sich vorzugsweise von Ölsäure ableitet.

5. Bituminöse Zusammensetzung nach einem der vorhergehenden Ansprüche, **dadurch gekennzeichnet, dass** R für einen CₙH₂ₙ₊ₓ-Rest steht, wobei 7 < n <21 und x für -2, 0 oder 2 steht.

6. Bituminöse Zusammensetzung nach einem der vorhergehenden Ansprüche in Form einer Emulsion, die ferner Wasser umfasst, vorzugsweise in einer Menge zwischen 20 und 60 Gew.-% Wasser, bezogen auf die Zusammensetzung in wasserfreier Form.

7. Bituminöse Zusammensetzung nach einem der vorhergehenden Ansprüche, die ferner mindestens ein Cotensid, das aus anionischen Tensiden, kationischen Tensiden, nichtionischen Tensiden und Mischungen davon ausgewählt ist, umfasst.

8. Bituminöse Zusammensetzung nach einem der vorhergehenden Ansprüche, die ferner mindestens ein aus
➢ A1: dem Produkt der chemischen Formel R-O-((CH₂CH(CH₃)O)ₐ-(CH₂CH₃O)_{b})_{c}P(=O)-OH_{d}, wobei P für ein Phosphoratom steht, c zwischen 1 und 2 liegt, c+d gleich 3 ist, a zwischen 0 und 3 liegt, b zwischen 0 und 6 liegt und R für eine Kohlenwasserstoffkette mit 6 bis 30 Kohlenstoffatomen steht,
➢ B1: dem Produkt der Reaktion von (di)alk(en)yl-phenolen mit Aldehyden, wobei die Aldehyde 1 bis 10 Kohlenstoffatome und spezieller 1 bis 5 Kohlenstoffatome enthalten, und spezieller Paraformaldehyd oder Acetaldehyd mit nachfolgender (Poly)oxyethylierung und/oder (Poly)oxypropylierung, wobei die Alk(en)ylgruppen zwischen 1 und 50 Kohlenstoffatome und vorzugsweise zwischen 2 und 20 Kohlenstoffatome und spezieller 3 bis 12 Kohlenstoffatome aufweisen und im Fall von Dialk(en)ylphenolen gleich oder verschieden sein können, der durch (Poly)oxyethylierung und/oder (Poly)oxypropylierung aufgebaute Teil ein Molekulargewicht größer gleich 45 g/mol und kleiner 20.000 g/mol aufweist und die Zahl der Phenoleinheiten des Produkts B1 zwischen 3 und 50 variiert,
➢ C1: (poly)oxyothyliertem und/oder (poly)oxypropyliertem 2,2-Bis(4-hydroxyphenyl)propan-Epichlorhydrin-Copolymer, wobei der durch (Poly)oxyethylierung und/oder (Poly)oxypropylierung aufgebaute Teil ein Molekulargewicht größer gleich 45 g/mol und kleiner 20.000 g/mol aufweist,
➢ D1: (poly)oxyethyliertem und/oder (poly)oxypropyliertem Bis(4-hydroxyphenyl)ethan-Epichlorhydrin-Copolymer, wobei der durch (Poly)oxyethylierung und/oder (Poly)oxypropylierung aufgebaute Teil ein Molekulargewicht größer gleich 45 g/mol und kleiner 20.000 g/mol aufweist,
➢ E1: (poly)oxyethyliertem und/oder (poly)oxypropyliertem Bis(4-hydroxyphenyl)methan-Epichlorhydrin-Copolymer, wobei der durch (Poly)oxyethylierung und/oder (Poly)oxypropylierung aufgebaute Teil ein Molekulargewicht größer gleich 45 g/mol und kleiner 20.000 g/mol aufweist,
➢ F1: dem Produkt der (Poly)oxyethylierung und/oder (Poly)oxypropylierung einer Alkyldicarbonsäure oder einer Mischung von Alkyldicarbonsäuren, wobei die Alkylgruppen zwischen 1 und 20 Kohlenstoffatome und vorzugsweise zwischen 1 und 10 aufweisen und die Gesamtheit der durch (Poly)oxyethylierung und/oder (Poly)oxypropylierung aufgebauten Teile ein Molekulargewicht größer 100 g/mol und kleiner 20.000 g/mol aufweisen,
➢ G1: dem Produkt der (Poly)oxyethylierung und/oder (Poly)oxypropylierung einer Fettsäure mit einer Kohlenstoffatomzahl zwischen 10 und 30 und spezieller Tallölfettsäure, wobei der durch (Poly)oxyethylierung und/oder (Poly)oxypropylierung aufgebaute Teil ein Molekulargewicht größer 100 g/mol und kleiner 20.000 g/mol aufweisen,
➢ H1: dem Produkt der Reaktion zwischen dem Produkt B1 und der Mischung der Produkte F1 und G1,
➢ I1: Salz von Alk(en)yl(aryl)sulfonsäure und Alk(en)yl(aryl)amin, wobei die Alk(en)yl(aryl)-Einheiten eine Kohlenstoffatomzahl zwischen 6 und 30 aufweisen, und spezieller dem Salz von Dodecylbenzolsulfonsäure und Talgamin sowie dem Salz von Dodecylbenzolsulfonsäure und Cyclohexylamin,
➢ J1 : Salz von Alk(en)yl(aryl)sulfonsäure und Morpholin oder Pyrazin oder Pyrazolin oder Pyrazolon oder Pyridin oder Pyridon oder Pyrimidin oder Pyrrol oder Pyrrolidin oder Pyrrolidon oder Pyrrolin oder Toluidin oder Imidazol oder Indol oder Indolin oder Oxindol, wobei die Alk(en)yl-(aryl)-Einheiten eine Kohlonstoffatamzahl zwischen 6 und 30 aufweisen, und spezieller dem Salz von Dodecylbenzolsulfonsäure und Morpholin,
➢ K1: statistisch oder blockartig aufgebautem bzw. aufgebauten Ethylenoxid-Propylenoxid-Copolymer(en) mit einem Molekulargewicht zwischen 500 g/mol und 20.000 g/mol und einem Gewichtsverhältnis von Ethylenoxid zu Copolymer zwischen 1% und 70%, allein oder als Mischung mit anderen Mitgliedern dieser Klasse
ausgewähltes Additiv umfasst.

9. Bituminöse Zusammensetzung nach einem der vorhergehenden Ansprüche, die ferner mindestens einen zur Bildung eines supramolekularen Netzwerks befähigten Bestandteil umfasst.

10. Bituminöse Zusammensetzung nach Anspruch 9, wobei der zur Bildung eines supramolekularen Netzwerks befähigte Bestandteil das supramolekulare Polymer ist, das sich aus der Reaktion zwischen 2-Aminoethylimidazolidin-2-on (UDETA) und/oder 3-Amino-1,2,4-triazol und einer Mischung, die
• 51 bis 100 Gew.-% eines oder mehrerer gleicher oder verschiedener Fettsäuredimere und/oder eines oder mehrerer gleicher oder verschiedener Fettsäuretrimere und
• 0 bis 49 Gew.-% eines oder mehrerer gleicher oder verschiedener Fettsäuremonomere und/oder eines oder mehrerer gleicher oder verschiedener Fettsäureoligomere
enthält, ableitet.

11. Bituminöse Zusammensetzung nach Anspruch 9, wobei es sich bei dem zur Bildung eines supramolekularen Netzwerks befähigten Bestandteil um eine durch Zusammenlagerung von herkömmlichen Polymeren über physikalische Bindungen gebildete supramolekulare Struktur handelt, wobei die herkömmlichen Polymere mit mindestens einer funktionellen Gruppe pro Polymer gepfropft sind, wobei die Gruppe zur Wechselwirkung über Wasserstoffbrückenbindungen befähigt ist.

12. Verwendung einer bituminösen Zusammensetzung nach einem der Ansprüche 1 bis 11 zur Herstellung von bituminösen Produkten für Straßenbauanwendungen oder dichtungsschichten wie beispielsweise Voranstrichen, lagerfähige hohlraumarmem Mischgut, Grave-Emulsionen oder auch schweren Kalteinbaudecken.

13. Bituminöses Produkt, umfassend mindestens eine bituminöse Zusammensetzung nach einem der sprüche 1 bis 11.

## Claims

1. Bituminous composition comprising:
at least one bituminous binder, and
- at least one composition comprising:
i) from 50% to 100% by weight, with respect to the total weight of the said composition, of a surfactant having the following formula (I) :
**R-CO-O-(CH₂)₂-N⁺(R¹R²R³)X1⁻** **(I)**
in which:
R is a saturated or unsaturated, linear or branched and optionally hydroxylated C₄-C₃₂, preferably C₇-C₂₁, hydrocarbon chain,
R¹, R² and R³ each represent, independently of one another, a C₁-C₄ alkyl radical,
X1 is a halogen or mesyl radical,
ii) from 0% to 15% by weight, with respect to the total weight of the said composition, of HX1,
iii) from 0% to 40% by weight, with respect to the total weight of the said composition, of a fatty acid of formula (III) R-CO-OH, and
iv) from 0% to 40% by weight, with respect to the total weight of the said composition, of compound of formula (IV) HO-(CH₂)₂-N+(R₁R₂R₃)X1⁻;
in which composition i) + ii) + iii) + iv) represent 100% by weight of the total weight of the said composition.

2. Bituminous composition according to Claim 1, in which X1 is the mesyl radical and R¹, R² and R³ are identical and each represent the methyl radical.

3. Bituminous composition according to Claim 1 or 2, **characterized in that** R is a chain resulting from fatty acids present in natural vegetable oils, preferably chosen from rapeseed oil, sunflower oil, soybean oil, linseed oil, coconut oil, palm oil, castor oil and their mixtures.

4. Bituminous composition according to any one of the preceding claims, **characterized in that** R results from a fatty acid chosen from oleic acid, lauric acid, palmitic acid, ricinoleic acid, linoleic acid and their mixtures; preferably, R results from oleic acid.

5. Bituminous composition according to any one of the preceding claims, **characterized in that** R represents a CₙH₂ₙ₊ₓ radical in which 7 < n < 21 and x is -2, 0 or 2.

6. Bituminous composition according to any one of the preceding claims, in the emulsion form, additionally comprising water, preferably in amounts of between 20% and 60% by weight of water, with respect to the composition in the anhydrous form.

7. Bituminous composition according to any one of the preceding claims, additionally comprising at least one cosurfactant chosen from anionic surfactants, cationic surfactants, nonionic surfactants and their mixtures.

8. Bituminous composition according to any one of the preceding claims, additionally comprising at least one additive chosen from:
➢ A1: the product having the chemical formula R-O- ((CH₂CH (CH₃) O)ₐ- (CH₂CH₂O) _{b})_{c}P (=O) -OH_{d} with P the phosphorus atom, c between 1 and 2, c + d equal to 3, a between 0 and 3, b between 0 and 6 and R representing a hydrocarbon chain having from 6 to 30 carbon atoms,
➢ B1: the product of the reaction of (di)alk(en)ylphenols with aldehydes, the aldehydes comprising from 1 to 10 carbon atoms and more particularly from 1 to 5 carbon atoms and more particularly paraformaldehyde or acetaldehyde, followed by a (poly)oxyethylation and/or (poly)oxypropylation, the alk(en)yl groups having between 1 and 50 carbon atoms and preferably between 2 and 20 carbon atoms and more particularly from 3 to 12 carbon atoms, and being able to be identical or different in the case of dialk(en)ylphenols, the part constructed by (poly)oxyethylation and/or (poly)oxypropylation having a molar mass of greater than or equal to 45 g/mol and less than 20 000 g/mol, the number of phenolic units of the product B1 varying between 3 and 50,
➢ C1: (poly)oxyethylated and/or (poly)oxypropylated 2,2-bis(4-hydroxyphenyl)propane/epichlorohydrin copolymer, the part constructed by (poly)oxyethylation and/or (poly)oxypropylation having a molar mass of greater than or equal to 45 g/mol and less than 20 000 g/mol,
➢ D1: (poly)oxyethylated and/or (poly)oxypropylated bis(4-hydroxyphenyl)ethane/epichlorohydrin copolymer, the part constructed by (poly)oxyethylation and/or (poly)oxypropylation having a molar mass of greater than or equal to 45 g/mol and less than 20 000 g/mol,
➢ E1: (poly)oxyethylated and/or (poly)oxypropylated bis(4-hydroxyphenyl)methan.e/spichlorohydrin copolymer, the part constructed by (poly)oxyethylation and/or (poly)oxypropylation having a molar mass of greater than or equal to 45 g/mol and less than 20 000 g/mol,
➢ F1: the product of the (poly)oxyethylation and/or (poly)oxypropylation of an alkyldicarboxylic acid or mixture of alkyldicarboxylic acids, the alkyl groups having between 1 and 20 carbon atoms and preferably between 1 and 10 carbon atoms, all of the parts constructed by (poly)oxyethylation and/or (poly)oxypropylation having a molar mass of greater than 100 g/mol and less than 20 000 g/mol,
➢ G1: the product of the (poly)oxyethylation and/or (poly)oxypropylation of a fatty acid, the number of carbon atoms of which is between 10 and 30, and more particularly on tall oil fatty acid, the part constructed by (poly)oxyethylation and/or (poly)oxypropylation having a molar mass of greater than 100 g/mol and less than 20 000 g/mol,
➢ H1: the product of the reaction between the product B1 and the mixture of products F1 and G1,
➢ I1: salt of alk(en)yl(aryl)sulphonic acid and of alk(en)yl(aryl)amine, the alk(en)yl(aryl) units comprising a number of carbon atoms of between 6 and 30, and more particularly the salt of dodecylbenzenesulphonic acid and of tallow amine and also the salt of dodecylbenzenesulphonic acid and of cyclohexylamine,
➢ J1: salt of alk(en)yl(aryl)sulphonic acid and of morpholine or pyrazine or pyrazoline or pyrazolone or pyridine or pyridone or pyrimidine or pyrrole or pyrrolidine or pyrrolidone or pyrroline or toluidine or imidazole or indole or indoline or oxindole, the alk(en)yl(aryl) units comprising a number of carbon atoms of between 6 and 30, and more particularly the salt of dodecylbenzenesulphonic acid and of morpholine,
➢ K1: ethylene oxide/propylene oxide copolymer(s), random or block, with a molar mass of between 500 g/mol and 20 000 g/mol, with an ethylene oxide to copolymer ratio by weight of between 1% and 70%, alone or as a mixture with other members of this category.

9. Bituminous composition according to any one of the preceding claims, additionally comprising at least one component capable of forming a supramolecular network.

10. Bituminous composition according to Claim 9, in which the component capable of forming a supramolecular network is the supramolecular polymer resulting from the reaction between 2-aminoethylimidazolidin-2-one (UDETA) and/or 3-amino-1,2,4-triazole and a mixture comprising:
• from 51% to 100% by weight of one or more identical or different fatty acid dimers and/or of one or more identical or different fatty acid trimers; and
• from 0% to 49% by weight of one or more identical or different fatty acid monomers and/or of one or more identical or different fatty acid higher oligomers.

11. Bituminous composition according to Claim 9, in which the component capable of forming a supramolecular network is a supramolecular structure formed by the assembling of conventional polymers using physical bonds, the conventional polymers being grafted with at least one functional group per polymer, which group is capable of interacting via the hydrogen bond.

12. Use of a bituminous composition according to any one of Claims 1 to 11 in the manufacture of bituminous products for road applications or leaktight coatings, such as, for example, tack coats or layers, open-graded storage-grade bituminous mixes, grave emulsions or also dense cold bituminous mixes.

13. Bituminous product comprising at least one bituminous composition according to any one of Claims 1 to 11.
